# EUROPEAN PATENT APPLICATION

(11) **EP 4 722 958 A1**
(43) Date of publication of application: **08.04.2026**
(21) Application number: 25206215.3
(22) Date of filing: 02.10.2025
(51) Int. Cl.: G06F 21/44

(54) **SERVICE SYSTEM, SERVER, AND SERVICE TOOL FOR VEHICLE ACCESS**

(30) Priority: 04.10.2024 JP 2024175120
(71) Applicant: KUBOTA CORPORATION, Osaka-shi, Osaka 556-8601 (JP)
(72) Inventor: FUJIMOTO, Koichi, SAKAI-SHI, OSAKA, 5900908 (JP); MIURA, Keisuke, SAKAI-SHI, OSAKA, 5900908 (JP)
(74) Representative: Cabinet Beau de Loménie

(57) **Abstract**

A service system (S) includes a generator (54) configured or programmed to generate an access token (AT) through encryption calculation using identification information (e.g., ECU serial number) of at least one to-be-serviced unit (e.g., ECU (20d)) and identification information (e.g., service tool serial number) of a service tool (100), the at least one to-be-serviced unit (DT) being a selected at least one of a plurality of electronic control units (21) provided in or on a vehicle (working vehicle (1)), the service tool (100) being configured or programmed to diagnostically check and/or reprogram the at least one to-be-serviced unit (DT). The service tool (100) is configured or programmed to acquire the access token (AT) and output the acquired access token (AT) to the at least one to-be-serviced unit (DT) to obtain authentication.

## Description

### BACKGROUND OF THE INVENTION

### Field of the Invention

The present invention relates to service systems, servers, and service tools that each diagnostically check and/or reprogram electronic control unit(s) (ECU) included in an in-vehicle controller provided in or on a vehicle.

### Description of the Related Art

Japanese Unexamined Patent Application Publication No. 2022-149662 discloses a program update system that includes a distribution server, an authentication server, and a vehicle service system, and in which the vehicle service system connected in a wired manner to an in-vehicle controller of a vehicle updates a program of the in-vehicle controller. When the vehicle service system is connected to the in-vehicle controller, the vehicle service system acquires the activation state of an ECU included in the in-vehicle controller and the version of the program of the ECU. The vehicle service system requests the distribution server to provide an update program to update the program of the ECU, and rewrites the program installed in the ECU of the in-vehicle controller using the update program downloaded from the distribution server.

### SUMMARY OF THE INVENTION

The vehicle service system of Japanese Unexamined Patent Application Publication No. 2022-149662 is configured to update the program of the ECU of the vehicle while keeping the vehicle service system in an online state with the distribution server, and does not consider a system that an operator, who is permitted to make access, can provide a service to an offline working vehicle.

Example embodiments of the present invention make it possible to provide systems that an operator, who is permitted to make access, can provide a service to offline working vehicles.

A service system according to an example embodiment of the present invention includes a generator configured or programmed to generate an access token through encryption calculation using identification information of at least one to-be-serviced unit and identification information of a service tool, the at least one to-be-serviced unit being a selected at least one of a plurality of electronic control units provided in or on a vehicle, the service tool being configured or programmed to diagnostically check and/or reprogram the at least one to-be-serviced unit, wherein the service tool is configured or programmed to acquire the access token and output the acquired access token to the at least one to-be-serviced unit to obtain authentication.

A server according to an example embodiment of the present invention includes a generator configured or programmed to generate an access token through encryption calculation using identification information of at least one to-be-serviced unit and identification information of a service tool, the at least one to-be-serviced unit being a selected at least one of a plurality of electronic control units provided in or on a vehicle, the service tool being configured or programmed to diagnostically check and/or reprogram the at least one to-be-serviced unit, the access token being an access token that the service tool outputs to the at least one to-be-serviced unit to obtain authentication.

A service tool according to an example embodiment of the present invention is a service tool to diagnostically check and/or reprogram at least one to-be-serviced unit which is a selected at least one of a plurality of electronic control units provided in or on a vehicle, wherein the service tool is configured or programmed to acquire an access token from a generator configured or programmed to generate the access token through encryption calculation using identification information of the at least one to-be-serviced unit and identification information of the service tool, and output the acquired access token to the at least one to-be-serviced unit to obtain authentication.

With example embodiments of the present invention, it is possible to provide systems that an operator, who is permitted to make access, can provide a service to offline working vehicles.

The above and other elements, features, steps, characteristics and advantages of the present invention will become more apparent from the following detailed description of the example embodiments with reference to the attached drawings.

### BRIEF DESCRIPTION OF THE DRAWINGS

A more complete appreciation of example embodiments of the present invention and many of the attendant advantages thereof will be readily obtained as the same becomes better understood by reference to the following detailed description when considered in connection with the accompanying drawings described below.
FIG. 1 is a block diagram illustrating a service system.
FIG. 2 is a schematic side view illustrating a working vehicle.
FIG. 3 illustrates a flow of a process to authenticate a service tool performed by a service system.
FIG. 4 illustrates a flow of a process in which a service tool acquires an access token from a server under an online condition.
FIG. 5 illustrates a flow of a process in which a service tool is authenticated by an electronic control unit using an access token under an offline condition.
FIG. 6 is a flowchart presenting steps performed by a service tool and a server under an online condition.
FIG. 7 illustrates a first table indicating the correspondence relationship between vehicle identification information and the type and the model number of a product of a vehicle.
FIG. 8 illustrates a second table presenting the correspondence relationship between the type and the model number of a product of a vehicle and the number and the serial number of an electronic control unit.
FIG. 9A illustrates a third table presenting the correspondence relationship between the product number and the serial number of a service tool.
FIG. 9B illustrates a fourth table presenting the correspondence relationship between the product number and the serial number of a service tool.
FIG. 10A illustrates an example of a display screen of a service tool.
FIG. 10B illustrates an example of a display screen of a service tool.
FIG. 10C illustrates an example of a display screen of a service tool.
FIG. 10D illustrates an example of a display screen of a service tool.
FIG. 10E illustrates an example of a display screen of a service tool.
FIG. 10F illustrates an example of a display screen of a service tool.
FIG. 11 is a flowchart presenting steps performed by a service tool and an electronic control unit under an offline condition.
FIG. 12 illustrates a flow of a process to authenticate a service tool performed by a service system of a first variation of an example embodiment of the present invention.

### DESCRIPTION OF THE EXAMPLE EMBODIMENTS

Example embodiments will now be described with reference to the accompanying drawings, wherein like reference numerals designate corresponding or identical elements throughout the various drawings. The drawings are to be viewed in an orientation in which the reference numerals are viewed correctly.

Hereinafter, example embodiments of the present invention will be described with reference to the drawings.

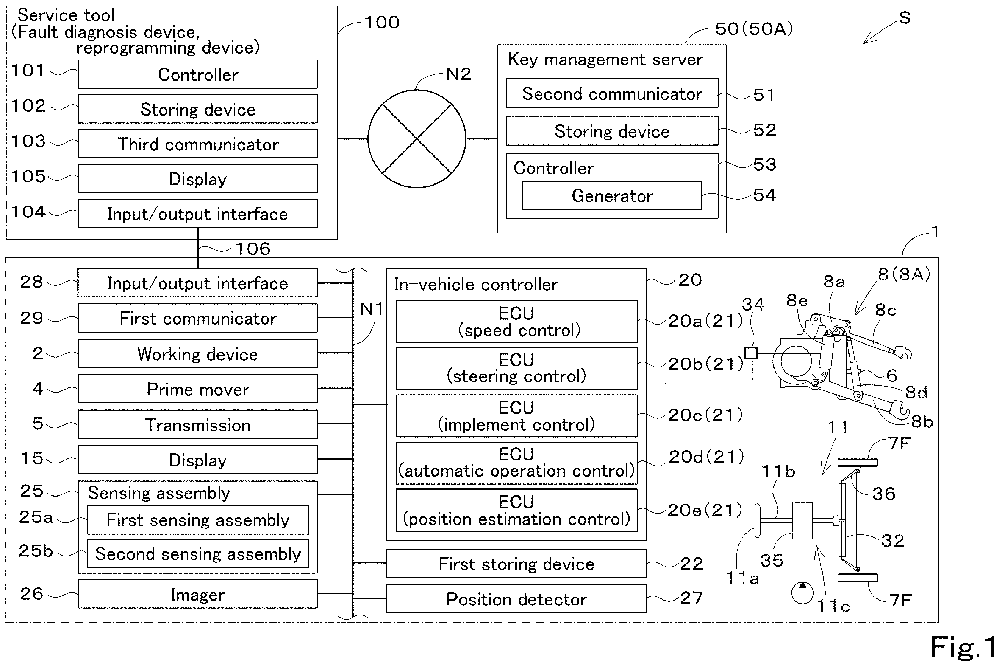

FIG. 1 is a block diagram illustrating a service system S according to the present example embodiment. The service system S includes, for example, a server 50 (for example, a key management server 50A) and a service tool 100 (for example, a fault diagnosis device and/or a reprogramming device), and diagnostically checks a plurality of electronic control units 21 included in an in-vehicle controller 20 provided in or on a working vehicle 1 using the service tool 100.

First, the working vehicle 1 will be described. The working vehicle 1 is a vehicle that can perform work while traveling, and in the present example embodiment, is a tractor in which a working device 2 (an implement) can be attached to a traveling vehicle body 3 (a machine body). Note that the working vehicle 1 is not limited to a tractor as long as the working vehicle 1 is a vehicle that can perform work while traveling. For example, the working vehicle 1 may be an agricultural working machine such as a combine, a rice transplanter, or a vegetable transplanter, or a construction working machine such as a compact track loader or a backhoe.

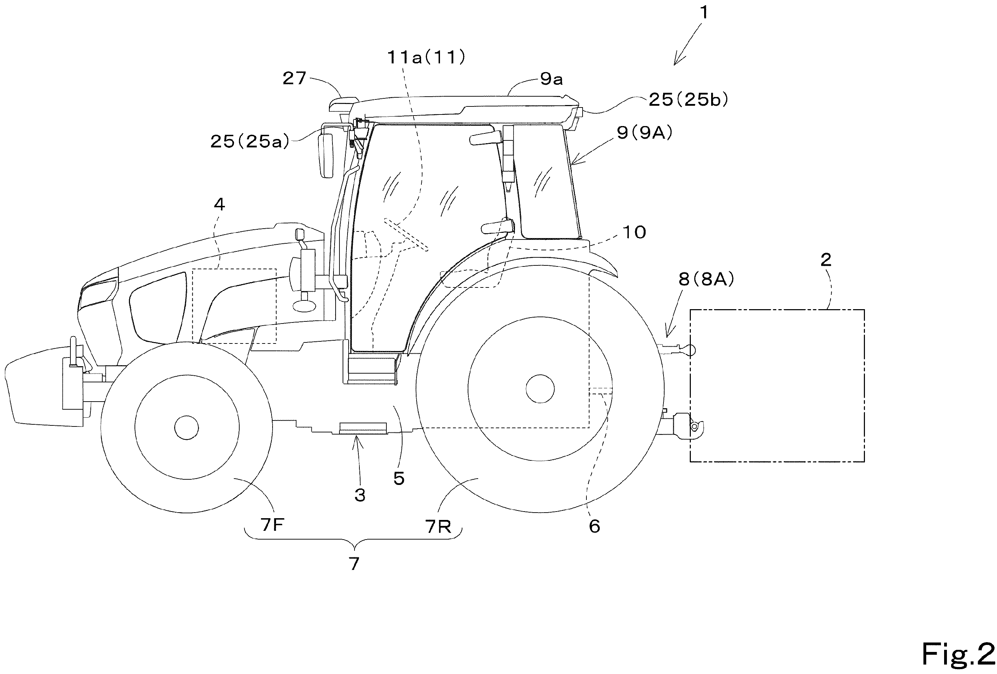

FIG. 2 is a schematic side view illustrating the working vehicle 1. As illustrated in FIG. 2, the working vehicle 1 includes the traveling vehicle body 3 including a traveling device 7, a prime mover 4, and a transmission 5. The traveling device 7 is driven to apply a propelling force to the traveling vehicle body 3. The traveling device 7 is a wheeled traveling device 7 in which at least one front wheel 7F and at least one rear wheel 7R are tires. The at least one front wheel 7F includes a pair of front wheels 7F, and the at least one rear wheel 7R includes a pair of rear wheels 7R so as to be spaced apart from each other in a width direction. As another example, a traveling device 7 in which front wheels 7F and/or rear wheels 7R are crawlers may be used. The traveling vehicle body 3 can travel forward and rearward by the driving of the traveling device 7.

The prime mover 4 is built in a front portion of the traveling vehicle body 3. The prime mover 4 is, for example, a diesel engine. As another example, the prime mover 4 may be another internal combustion engine such as a gasoline engine, an electric motor, or the like.

The transmission 5, by changing speed stages, can speed-change the power output from the prime mover 4 and switch the propelling force of the traveling device 7, and also can change the switching state of the traveling device 7 (switching of the traveling device 7 to forward travel or rearward travel). Also, the transmission 5 transmits the power of the prime mover 4 to a PTO shaft 6. The PTO shaft 6 is an output shaft that is connected to the working device 2 to drive the working device 2. PTO is an abbreviation for power take-off.

A protective structure 9 for protecting an operator's seat 10 is provided in an upper portion of the traveling vehicle body 3. The protective structure 9 is, for example, a cabin 9A surrounding the periphery of the operator's seat 10. The operator's seat 10 is provided inside the cabin 9A. Note that the protective structure 9 is not limited to the cabin 9A, and may be a canopy or a ROPS vertically provided rearward of the operator's seat 10.

The working device 2 is attached to the traveling vehicle body 3. In the tractor of the present example embodiment, the working device 2 is detachably attached to the traveling vehicle body 3. Specifically, a coupling device 8 to/from which the working device 2 is detachable/attachable is provided at the front portion and/or a rear portion of the traveling vehicle body 3. In the example illustrated in FIG. 2, the coupling device 8 is provided at the rear portion of the traveling vehicle body 3. Thus, when the working device 2 is coupled to the coupling device 8 and driven by the traveling device 7, the working vehicle 1 can tow the coupled working device 2.

In FIG. 2, a position changer 8A defined by a three-point linkage is exemplified as the coupling device 8. The position changer 8A is a raising/lowering device that raises/lowers the working device 2 with respect to the traveling vehicle body 3 to change the relative positions of the traveling vehicle body 3 and the working device 2. The position changer 8A defined by the three-point linkage will be described in detail below.

As illustrated in FIG. 1, the position changer 8A includes a lift arm 8a, a lower link 8b, a top link 8c, a lift rod 8d, and a lift cylinder 8e. A front end portion of the lift arm 8a is supported by a rear upper portion of a case (a transmission case) that houses the transmission 5 so as to be swingable upward or downward. The lift arm 8a is swung (raised/lowered) by the driving of the lift cylinder 8e. The lift cylinder 8e is a hydraulic cylinder. The lift cylinder 8e is connected to a hydraulic pump via a control valve 34. The control valve 34 is a solenoid valve or the like, and extends/retracts the lift cylinder 8e.

A front end portion of the lower link 8b is supported by a rear lower portion of the transmission 5 so as to be swingable upward or downward. A front end portion of the top link 8c is supported by a rear portion of the transmission 5, at a position higher than the lower link 8b so as to be swingable upward or downward. The lift rod 8d couples the lift arm 8a and the lower link 8b to each other. A rear portion of the lower link 8b and a rear portion of the top link 8c each have a hook shape.

When the lift cylinder 8e is driven (extends/retracts), the lift arm 8a is aised/lowered, and the lower link 8b coupled to the lift arm 8a via the lift rod 8d is raised/lowered. Accordingly, the working device 2 swings upward or downward (is raised/lowered) with a front portion of the lower link 8b as a fulcrum.

Note that, in the above description, the position changer 8A defined by the three-point linkage has been described as an example of the coupling device 8, but the coupling device 8 that can couple at least the working device 2 to the traveling vehicle body 3 may be used. For example, the coupling device 8 may be defined by a swinging drawbar or the like that couples the working device 2 and the traveling vehicle body 3 to each other and does not change the relative positions of the working device 2 and the traveling vehicle body 3.

The working device 2 is a device that performs work in a work site (for example, an agricultural field) or on a work object in the work site (for example, a crop planted in the agricultural field, or the like). The working device 2 is a cultivator that performs cultivation work, a ridging machine that performs ridging, a ditcher that ditches furrows, a harvester that harvests crops, a mower that mows grass or the like, a tedder that spreads grass or the like, a rake that collects grass or the like, a baler that shapes grass or the like, a fertilizer spreader that spreads fertilizer, an agricultural chemical spreader that spreads agricultural chemicals, a separator that separates crops, or the like.

Note that, although the case where the working vehicle 1 is a tractor and the working device 2 is coupled to the coupling device 8 has been described, the working device 2 is not limited to an implement coupled to the traveling vehicle body 3 using the coupling device 8. For example, the working device 2 may be a front loader attached to the front portion of the traveling vehicle body 3.

Also, the working device 2 is only required to be a device that is provided in or on the working vehicle 1 and performs work in a work site, and does not have to be a device that is attachable/detachable to/from the traveling vehicle body 3, such as an implement. For example, when the working vehicle 1 is a combine, the working device 2 includes a mower that mows crops or the like. When the working vehicle 1 is a rice transplanter, the working device 2 includes a transplanter that performs planting of seedlings. When the working vehicle 1 is a backhoe or a compact track loader, an attachment attached to the position changer 8A (an arm, a boom, or the like) can be exemplified as the working device 2.

As illustrated in FIG. 1, the working vehicle 1 includes a steering device 11. The steering device 11 includes a handle 11a (a steering wheel), a steering shaft 11b (a rotation shaft) that rotates with rotation of the handle 11a, and an assist mechanism 11c (a power steering mechanism) that assists steering of the handle 11a.

The assist mechanism 11c includes a control valve 35 and a steering cylinder 32. The control valve 35 is, for example, a three-position switching valve that can be switched by movement of a spool or the like. The control valve 35 can be also switched by steering of the steering shaft 11b. The steering cylinder 32 is connected to arms 36 (knuckle arms) that change the direction of the front wheels 7F. Thus, by rotationally operating the handle 11a, the switch position and the opening of the control valve 35 are switched in accordance with the operation, and the steering cylinder 32 extends/retracts leftward or rightward in accordance with the switching position and the opening of the control valve 35, so that the steering direction of the front wheels 7F can be changed.

Note that the steering device 11 described above is merely an example, and is not limited to the configuration described above. For example, in a case where the traveling device 7 makes the propelling force on one side differ from the propelling force on another side in the width direction so that the steering angle can be changed, the traveling device 7 may be configured to also serve as the steering device 11.

As illustrated in FIG. 1, the working vehicle 1 includes an in-vehicle controller 20 (a first controller) and a first storing device (memory and/or storage) 22. The in-vehicle controller 20 is a controller of the working vehicle 1, and performs various types of control related to the working vehicle 1. For example, the in-vehicle controller 20 is connected to each device and each apparatus mounted in or on the working vehicle 1 via an in-vehicle network N1 such as CAN, ISOBUS, LIN, or FlexRay so as to be able to communicate with each device and each apparatus. For example, the in-vehicle controller 20 performs control processes (operations) of the working device 2, the prime mover 4, the transmission 5, the position changer 8A, the steering device 11, and the like based on signals (operation signals) input from a manual operator.

The in-vehicle controller 20 includes one or more memories, various analog circuit(s), various digital circuit(s), and/or the like. The one or more memories store (record) software program(s) to be executed by one or more processors and various types of data. The in-vehicle controller 20 can read the software programs from the one or more memories and perform various processes based on the software programs using the one or more processors. Note that the in-vehicle controller 20 may be configured or programmed to perform various processes based on predetermined logic circuit(s) using the one or more processors.

The processor includes, for example, a central processing unit (CPU), a graphics processing unit (GPU), a digital signal processor (DSP), a field programmable gate array (FPGA), an application specific integrated circuit (ASIC), and/or the like.

Additionally or alternatively, a configuration in which the software programs are stored in the first storing device 22 communicably connected to the in-vehicle controller 20 and are installed in the memory from the first storing device 22 may be used. The first storing device 22 includes a nonvolatile memory such as a hard disk drive (HDD) or a solid state drive (SSD).

As illustrated in FIG. 1, the working vehicle 1 includes one sensing assembly 25 or a plurality of sensing assemblies 25. The sensing assembly 25 performs sensing in a surrounding area of the working vehicle 1. Specifically, the sensing assembly 25 performs sensing by measuring the distance to an environment around the working vehicle 1 (object(s) in the surrounding area). The sensing assembly 25 is a range sensor to measure the distance to at least a portion of the surrounding area of the working vehicle 1. The sensing assembly 25 can measure the distance to at least a portion of the surrounding area of the working vehicle 1 and detect point cloud data of the environment around the working vehicle 1.

The sensing assembly 25 is connected to the in-vehicle controller 20 in a wired or wireless manner communicably with the in-vehicle controller 20, and outputs the sensing result to the in-vehicle controller 20. The sensing assembly 25 includes an optical range sensor, a signal processing circuit, and the like. The optical range sensor of the sensing assembly 25 may be, for example, Light Detection and Ranging (LiDAR).

The LiDAR sensor (laser sensor) emits pulsed measurement light (laser light) millions of times per second from a light source such as a laser diode, and reflects the measurement light using a rotating mirror to scan in the horizontal direction or the vertical direction and project the measurement light to a predetermined detection range (a sensing range, for example, 360°). The LiDAR receives the reflected light of the measurement light from the object using a light receiving element. The signal processing circuit detects the distance to the object based on the period of time from when the measurement light is emitted by the LiDAR to when the reflected light is received (ToF (Time of Flight) method).

Note that, as the optical range sensor of the sensing assembly 25, a ToF camera can be exemplified in addition to the LiDAR sensor. Also, in the example described above, the case where the sensing assembly 25 includes the optical range sensor has been exemplified, but a sonic range sensor (for example, an aerial ultrasonic sensor such as sonar) may be used instead of the optical range sensor.

In the present example embodiment, the traveling direction of the working vehicle 1 is forward or rearward. Thus, the sensing assembly 25 can perform sensing in a range including at least areas located forward and rearward of the working vehicle 1 as the surrounding area of the working vehicle 1. In the example illustrated in FIG. 2, two sensing assemblies 25 are provided in or on the working vehicle 1, and one sensing assembly 25 (a first sensing assembly 25a) performs sensing in the front area and another sensing assembly 25 (a second sensing assembly 25b) performs sensing in the rear area. For example, the first sensing assembly 25a is provided at a front portion of a roof 9a of the cabin 9A. Also, the second sensing assembly 25b is provided at a rear portion of the roof 9a.

The first sensing assembly 25a is configured to not sense a region in which device(s) and apparatus(es) provided in or on the working vehicle 1, such as the cabin 9A including the roof 9a, are detected. Thus, the first sensing assembly 25a performs sensing in a range (for example, 180°) located substantially forward of the working vehicle 1, and detects point cloud data in the sensing range.

The second sensing assembly 25b is configured to not sense a region in which device(s) and apparatus(es) provided in or on the working vehicle 1, such as the cabin 9A including the roof 9a, are detected. The second sensing assembly 25b may acquire the position of the working device 2 coupled to the position changer 8A and may be configured to not sense the region in which the working device 2 is detected. Thus, the second sensing assembly 25b performs sensing in a range (for example, 180°) located substantially rearward of the working vehicle 1, and detects point cloud data in the sensing range.

With the above configuration, in the present example embodiment, the first sensing assembly 25a and the second sensing assembly 25b can perform sensing in the surrounding area of the working vehicle 1 by approximately 360°. Note that it is sufficient that the one or more sensing assemblies 25 are provided in or on the working vehicle 1 and can perform sensing in the surrounding area of the working vehicle 1 using the one sensing assembly 25 or the plurality of sensing assemblies 25. The sensing range is not limited to approximately 360° around the working vehicle 1, and the attachment position of the sensing assembly 25 is not limited to the above-described position.

As illustrated in FIG. 1, the working vehicle 1 includes an imager 26. The imager 26 is a charge coupled device (CCD) camera including a CCD image sensor, a complementary metal oxide semiconductor (CMOS) camera including a CMOS image sensor, and/or the like. The imager 26 is provided at the front portion of the roof 9a. The imager 26 captures an image of the front area of the working vehicle 1, and the captured image includes a state of the front area of the working vehicle 1.

As illustrated in FIG. 1, the working vehicle 1 includes a position detector 27 (a position measuring device) that detects the position thereof. The position detector 27 is provided, for example, forward of the roof 9a. The position detector 27 is a device that detects the position (the latitude and the longitude) thereof based on data of positioning satellites (a positioning satellite system) such as GPS or Quasi-Zenith Satellite System (QZSS). Note that the position detector 27 may include an inertial device such as an acceleration sensor that detects acceleration or a gyroscope sensor that detects angular velocity, and may correct the position using the acceleration or the angular velocity detected by the inertial device, or may correct the position using another correction signal or the like. However, this does not imply any limitation.

The in-vehicle controller 20 includes the plurality of electronic control units 21. The plurality of electronic control units 21 include, for example, an ECU 20a for speed control, an ECU 20b for steering control, an ECU 20c for implement control, an ECU 20d for automatic operation control, an ECU 20e for position estimation control, and the like.

The ECU 20a controls the prime mover 4, the transmission 5, and a brake to control the speed of the working vehicle 1. For example, the ECU 20a includes a processor. The processor functions as the ECU 20a for speed control by executing a speed control program stored in a memory.

The ECU 20b controls the steering of the working vehicle 1 by controlling the steering device 11 (the control valve 35 or the like) based on the detection value of a sensor that detects the steering angle of the handle 11a (the steering wheel). For example, the ECU 20b includes a processor. The processor functions as the ECU 20b for steering control by executing a steering control program stored in a memory.

The ECU 20c controls the motions of the coupling device 8 (the position changer 8A defined by the three-point linkage), the PTO shaft 6, and the like, to cause the working device 2 to move in a predetermined motion. Also, the ECU 20c generates a signal for controlling the motion of the working device 2 and transmits the signal to the working device 2 via the in-vehicle network N1. For example, the ECU 20c includes a processor. The processor functions as the ECU 20c for implement control by executing an implement control program stored in a memory.

The ECU 20d performs calculation and control for providing automatic operation based on data output from the position detector 27 (the position measuring device), the imager 26, and the sensing assembly 25. For example, the ECU 20d includes a processor. The processor functions as the ECU 20d for automatic operation control by executing an automatic operation control program stored in a memory.

The ECU 20d performs control of the automatic operation of the working vehicle 1 (hereinafter referred to as automatic operation control). The ECU 20d is capable of executing line-type automatic operation control and/or autonomous automatic operation control. Describing the automatic operation with the line-type automatic operation control as an example, the ECU 20d controls each apparatus and each device included in the working vehicle 1 so that the traveling vehicle body 3 travels along a planned travel route based on an estimated position estimated by the ECU 20e (or the position (the latitude and the longitude) thereof detected by the position detector 27) and a planned travel route defined in advance. For example, the ECU 20d controls the steering angle and the travel speed (vehicle speed) of the traveling vehicle body 3 as the automatic operation control. Note that the planned travel route may be stored in the first storing device 22 in advance, or may be created (defined) based on the estimated position estimated by the ECU 20e when the working vehicle 1 actually travels.

The ECU 20d controls the steering angle so that the positional deviation between the estimated position and the planned travel route is less than a threshold in the automatic operation control. That is, when the positional deviation between the estimated position and the planned travel route is less than the threshold, the ECU 20d controls the control valve 35 of the steering device 11 to keep the steering angle. In contrast, when the positional deviation between the estimated position and the planned travel route is equal to or more than the threshold, the ECU 20d controls the control valve 35 of the steering device 11 to change the steering angle in a direction in which the positional deviation decreases.

Note that, in the above-described example embodiment, the automatic operation has been described by taking the line-type automatic operation control as an example, but the ECU 20d may control each device and each apparatus included in the working vehicle 1 so as to perform work in an agricultural field based on the estimated position and/or the sensing result regardless of the planned travel route in the autonomous automatic operation control.

The ECU 20e estimates the position of the working vehicle 1 based on the sensing result of the sensing assembly 25. For example, the ECU 20e includes a processor. The processor functions as the ECU 20e for position estimation control by executing a position estimation program stored in a memory.

The ECU 20e estimates the position of the working vehicle 1 based on the sensing result of the sensing assembly 25 and environmental map information. The ECU 20e performs position estimation based on the sensing result from the sensing assembly 25 (range signal obtained from the range sensor), the environmental map information, and a Simultaneous Localization and Mapping (SLAM) algorithm.

In the position estimation of the working vehicle 1, the ECU 20e acquires point cloud data (detected point cloud data) from the sensing result from the sensing assembly 25 of the working vehicle 1, and aligns (matches) the acquired detected point cloud data with point cloud data of the environmental map information to perform the position estimation of the working vehicle 1. The ECU 20e estimates a predetermined position of the working vehicle 1 as the position estimation of the working vehicle 1.

Additionally or alternatively, the ECU 20e may estimate (position-estimate) the position (the estimated position) of the working vehicle 1 (the traveling vehicle body 3) with reference to the position of the position detector 27, which is attached to the working vehicle 1, detected by the position detector 27 using a satellite positioning system (positioning satellites) such as D-GPS, GPS, GLONASS, BeiDou, Galileo, or QZSS, that is, the position (for example, the latitude and the longitude) of a GPS antenna. In this case, the position (for example, the latitude and the longitude) of the position detector 27 detected by the position detector 27 may be used, and the sensing result of the sensing assembly 25 and the environmental map information may not be used.

Additionally, the working vehicle 1 includes a display 15 that performs various types of display. The display 15 may be a display located in the vicinity of the operator's seat 10 of the working vehicle 1, or may be a portable terminal carried by the operator, an administrator terminal that monitors the work of the working vehicle 1, or the like. Examples of the portable terminal and the administrator terminal include terminals such as a smartphone (a multifunctional mobile phone), a tablet, and a PDA, and stationary computers such as a personal computer. The display 15 displays the current position of the working vehicle 1 on an agricultural field map indicating the agricultural field based on the estimated position estimated by the ECU 20e and the agricultural field map. Also, the display 15 displays a captured image captured by the imager 26.

As illustrated in FIG. 1, the working vehicle 1 includes an input/output interface 28 that can be connected to the service tool 100. The input/output interface 28 includes a connector to which a cable 106 is connected and an interface circuit, and executes data communication with the service tool 100 under the control of the in-vehicle controller 20. The input/output interface 28 is a serial interface such as a Universal Serial Bus (USB) interface.

The working vehicle 1 includes a first communicator 29. The first communicator 29 is a communication module that performs one of direct communication and indirect communication with the server 50 and another external device. For example, the first communicator 29 can perform wireless communication according to a communication standard, such as IEEE802.11 series Wireless Fidelity (Wi-Fi, registered trademark), Bluetooth (registered trademark) Low Energy (BLE), Low Power, Wide Area (LPWA), or Low-Power Wide-Area Network (LPWAN). Additionally or alternatively, the first communicator 29 can perform wireless communication via, for example, a mobile phone communication network or a data communication network.

Next, the server 50 will be described. As illustrated in FIG. 1, the server 50 is, for example, the key management server 50A. The key management server 50A includes a second communicator 51, a storing device (memory and/or storage) 52, and a controller 53. The second communicator 51 is a communication module to perform one of direct communication or indirect communication with the service tool 100, similar to the first communicator 29. The second communicator 51 can perform wireless communication via, for example, a mobile phone communication network or a data communication network. The storing device 52 is, for example, a nonvolatile memory such as an HDD or an SSD.

The controller 53 performs various types of control related to the key management server 50A. The controller 53 includes one or more memories, various analog circuit(s), various digital circuit(s), and/or the like. The one or more memories store (record) software programs to be executed by one or more processors and various types of data. The controller 53 can read the software programs from the one or more memories and perform various processes based on the software programs using the one or more processors. The processor includes, for example, a CPU, a GPU, a DSP, an FPGA, an ASIC, and/or the like.

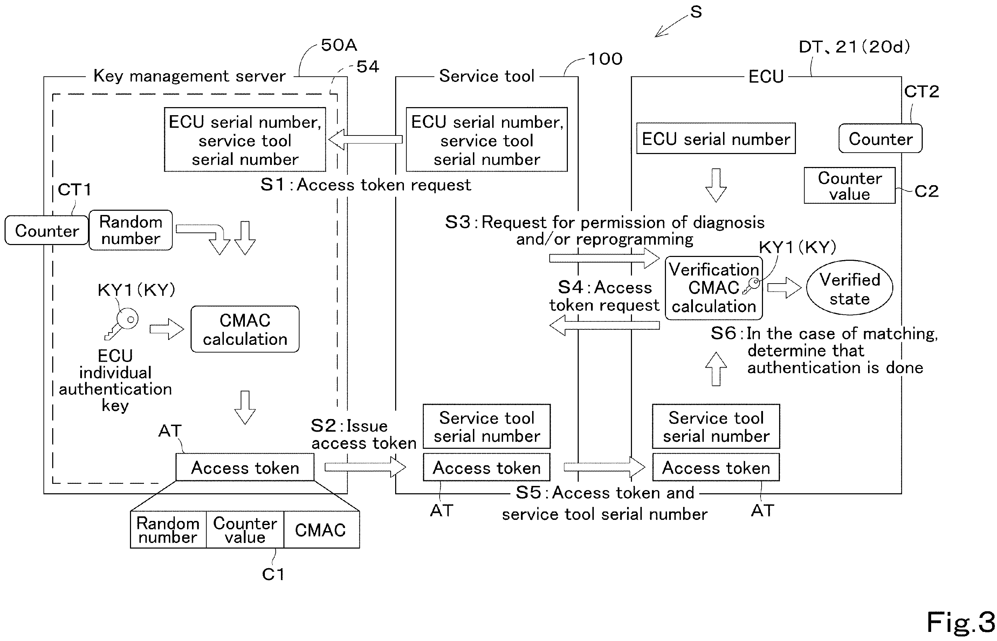

As illustrated in FIGS. 1 and 3, the controller 53 of the key management server 50A includes a generator 54. FIG. 3 illustrates a flow of a process to authenticate the service tool 100 performed by the service system S. As illustrated in FIG. 3, the generator 54 generates an access token AT through encryption calculation (for example, CMAC calculation) using identification information (for example, ECU serial number) of at least one to-be-serviced unit DT and identification information (for example, service tool serial number) of the service tool 100. The at least one to-be-serviced unit DT is a selected at least one of a plurality of electronic control units 21 provided in or on the working vehicle 1. The service tool 100 is configured or programmed to diagnostically check and/or reprogram the at least one to-be-serviced unit DT.

The access token AT is a credential indicating that a request is made based on the authority of a legitimate user (client), and is, for example, a character string for identification of the legitimate user. Examples of the legitimate user (client) include a person related to the manufacturer of the working vehicle 1, a person related to the legitimate distributor of the working vehicle 1, a person (for example, a dealer) who has a license to use the service tool 100, and the like.

Cipher-based MAC (CMAC) is a message authentication code algorithm based on block cipher. A message authentication code (MAC) is short information for authentication of a message, and whether the message has been tampered can be confirmed with the MAC.

The identification information (for example, the ECU serial number) of the at least one to-be-serviced unit DT is information for use in recognizing an electronic control unit 21 to be serviced. The ECU serial number is information for use in recognizing an ECU by which the service tool 100 is authenticated in the authentication process illustrated in FIG. 3.

The identification information (for example, the service tool serial number) of the service tool 100 is information (highly confidential information) that cannot be easily obtained or used by a person other than the legitimate user (client) even when the access token AT is leaked.

The key management server 50A includes a key KY for key cryptography. In the present example embodiment, the key management server 50A shares a key KY1 for symmetric key cryptography as the key KY for key cryptography. Note that the key KY for key cryptography may be a key for public key cryptography.

In the present example embodiment, the generator 54 generates the access token AT through encryption calculation (for example, CMAC calculation) using the identification information (the ECU serial number) of the at least one to-be-serviced unit DT, the identification information (for example, the service tool serial number) of the service tool 100, and the key KY1. The access token AT differs from one of the plurality of electronic control units 21 to another.

Note that the processor of the controller 53 functions as the generator 54 by executing a generation program stored in the memory.

Next, the service tool 100 will be described. As illustrated in FIG. 1, the service tool 100 includes, for example, a fault diagnosis device and/or a reprogramming device, and is a terminal device or an apparatus capable of diagnostically checking the plurality of electronic control units 21 (for example, the ECU 20a to the ECU 20e) included in the in-vehicle controller 20 provided in or on the working vehicle 1 and/or updating software of each of the plurality of electronic control units 21.

The service tool 100 can diagnostically check the electronic control unit 21 and/or update the software after being authenticated by the electronic control unit 21 (that is, after being authenticated successfully). In other words, when the service tool 100 cannot obtain authentication from the electronic control unit 21 (that is, when failing to obtain authentication), the service tool 100 cannot diagnostically check the electronic control unit 21 and/or update the software.

The service tool 100 includes a controller 101, a storing device (memory and/or storage) 102, a third communicator 103, an input/output interface 104, and a display 105.

The controller 101 performs various types of control related to the service tool 100. The controller 101 includes one or more memories, various analog circuit(s), various digital circuit(s), and the like. The one or more memories store (record) software programs to be executed by one or more processors and various types of data. The controller 101 can read the software programs from the one or more memories and perform various processes based on the software programs using the one or more processors. The processor includes, for example, a CPU, a GPU, a DSP, an FPGA, an ASIC, and/or the like. The storing device 102 is, for example, a nonvolatile memory such as an HDD or an SSD.

The third communicator 103 is a communication module to perform one of direct communication or indirect communication with the key management server 50A, similarly to the second communicator 51. Additionally or alternatively, the third communicator 103 can perform wireless communication via, for example, a mobile phone communication network or a data communication network.

The input/output interface 104 includes the cable 106 that can be connected to the working vehicle 1 and an interface circuit, and executes data communication with the working vehicle 1 under the control of the controller 101. The input/output interface 104 is a serial interface such as a Universal Serial Bus (USB) interface.

The display 105 is a display such as a liquid crystal display or an OLED display including a touch panel, and can perform various types of display and input of information.

The service tool 100 acquires the access token AT from the key management server 50A via a communication link N2 such as the Internet in advance before being authenticated by the at least one to-be-serviced unit DT. The service tool 100 acquires the access token AT from the key management server 50A in advance, for example, in a state of being connected to the key management server 50A via the communication link N2 (that is, the online state).

Then, the client connects the service tool 100 that has acquired the access token AT for the at least one to-be-serviced unit DT to the in-vehicle controller 20 of the working vehicle 1 via the cable 106. The service tool 100 outputs the acquired access token AT to the at least one to-be-serviced unit DT to obtain authentication. For example, the service tool 100, under a condition in which the working vehicle 1 and the service tool 100 are not connected to the key management server 50A via the communication link N2 (that is, an offline state), transmits the access token AT to the at least one to-be-serviced unit DT via the cable 106 and is authenticated by the at least one to-be-serviced unit DT based on the access token AT.

The electronic control units 21 share the key KY1 for symmetric key cryptography, but may use a key for public key cryptography. Note that, since the service tool 100 does not hold the key KY for key cryptography (the key KY1 for symmetric key cryptography or the key for public key cryptography), it is possible to completely prevent the key KY from being leaked from the service tool 100 to the outside.

The service tool 100 identifies the working vehicle 1 based on vehicle identification information, and recognizes the identification information of the at least one to-be-serviced unit DT in or on the working vehicle 1.

The service tool 100 transmits the access token AT including a counter value C1 to the at least one to-be-serviced unit DT. In a case where the access token AT is verified to match the expected one, the at least one to-be-serviced unit DT determines that the authentication succeeds when the counter value C1 included in the access token AT is larger than the counter value C2 thereof, and determines that the authentication fails when the counter value C1 is not larger than the counter value C2. Note that either the verification or the comparison of the counter values may be performed first. In a case where the counter value C1 included in the access token AT is decremented from a predetermined number every time the access token AT is issued and the counter value of the at least one to-be-serviced unit DT is decremented from a predetermined number every time the access token AT is verified, it may be determined that the authentication succeeds when the counter value C1 included in the access token AT is smaller than the counter value C2 of the at least one to-be-serviced unit DT, and it may be determined that the authentication fails when the counter value C1 is not smaller than the counter value C2. It may be determined that the authentication succeeds when the counter value C1 included in the access token AT is equal to the counter value C2 of the at least one to-be-serviced unit DT, and it may be determined that the authentication fails when the counter value C1 is not equal to the counter value C2.

The authentication of the service tool 100 performed by the service system S will be described. As illustrated in FIG. 3, the authentication of the service tool 100 performed by the service system S includes steps S1 to S6 as follows.

Step S1 is a step in which the service tool 100 sends a request for an access token AT to the key management server 50A. Step S2 is a step in which the key management server 50A issues the access token AT to the service tool 100.

Step S3 is a step in which the service tool 100 sends a request for permission to perform diagnosis and/or reprogramming to the at least one to-be-serviced unit DT (that is, selected electronic control unit 21 (ECU)). Step S4 is a step in which the at least one to-be-serviced unit DT (that is, the selected electronic control unit 21 (ECU)) sends a request for an access token AT to the service tool 100.

Step S5 is a step in which the service tool 100 outputs the access token AT and identification information (for example, service tool serial number) of the service tool 100 to the at least one to-be-serviced unit DT (that is, the selected electronic control unit 21 (ECU)). Step S6 is a step in which the at least one to-be-serviced unit DT (that is, the selected electronic control unit 21 (ECU)) determines whether the authentication of the service tool 100 is successful or fails.

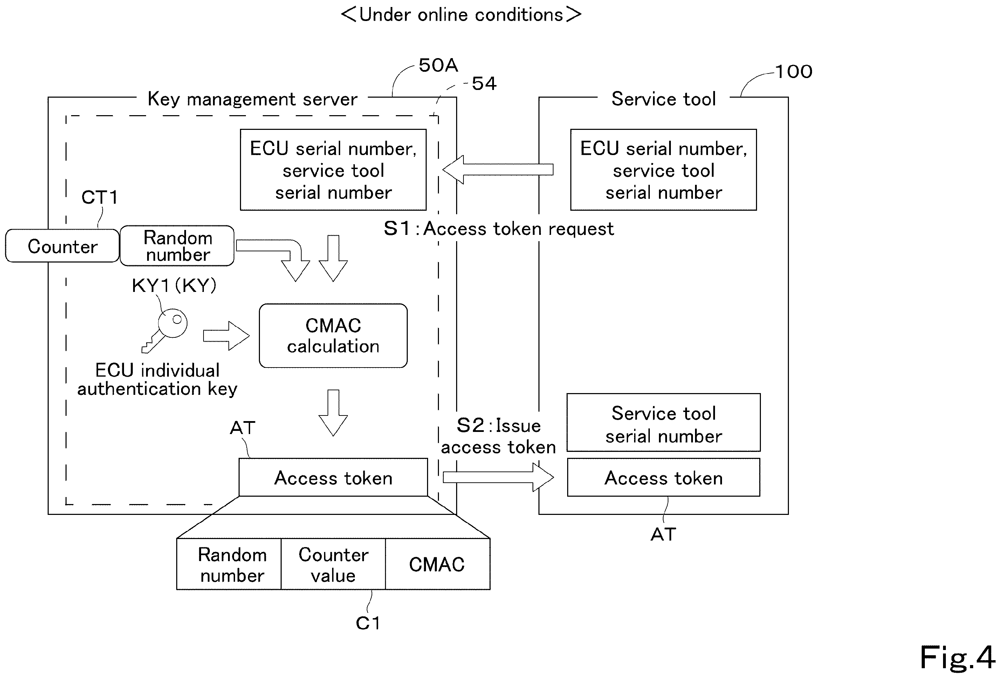

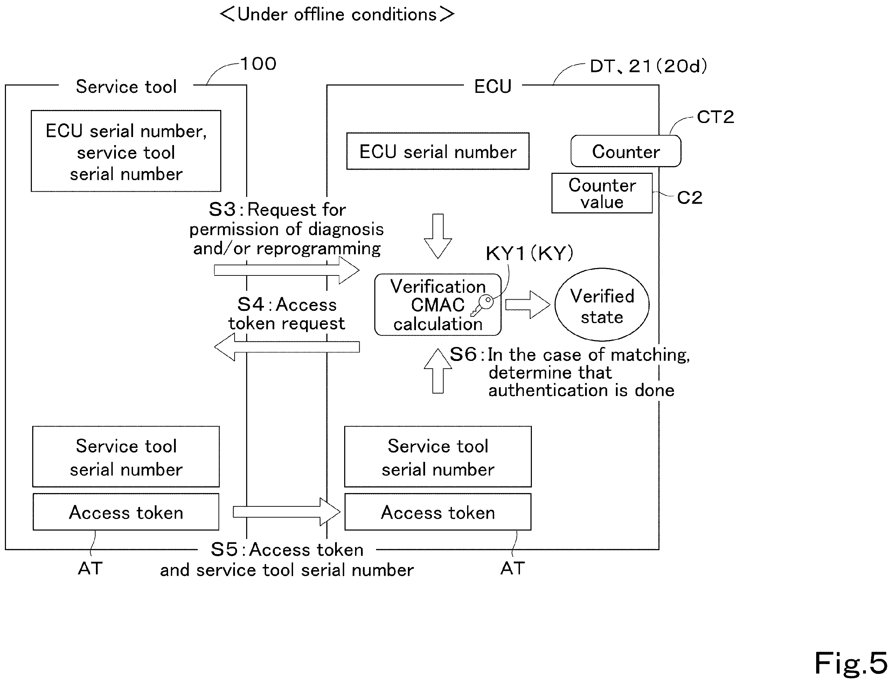

Steps S1 to S6 illustrated in FIG. 3 are roughly divided into steps S1 and S2 under an online condition illustrated in FIG. 4 and steps S3 to S6 under an offline condition illustrated in FIG. 5. Specifically, steps S1 and S2 illustrated in FIGS. 3 and 4 can be performed under the online condition, but cannot be performed under the offline condition. Steps S3 to S6 illustrated in FIGS. 3 and 5 can be performed not only under the online condition but also under the offline condition.

In other words, the service tool 100 can be authenticated by (i.e., obtain authentication from) the at least one to-be-serviced unit DT under the offline condition. Thus, the service tool 100 can obtain authentication from the electronic control unit 21 of the working vehicle 1 in an out-of-network area where network connection is bad (for example, a remote area, a mountain area, a sparsely populated area, a remote island, or the like), or under a condition in which network connection is temporarily impossible in a coverage area where network connection is available. Thus, when authenticated successfully, the service tool 100 can continue to diagnostically check and/or reprogram the at least one to-be-serviced unit DT under the offline condition.

FIG. 4 illustrates the flow of the process in which the service tool 100 acquires the access token AT from the server 50 (the key management server 50A) under the online condition. As illustrated in FIG. 4, steps S1 and S2 are performed in the state in which the service tool 100 and the key management server 50A are connected to each other via the communication link N2 (the online state). That is, steps S1 and S2 are performed under the online condition.

FIG. 5 illustrates the flow of the process in which the service tool 100 is authenticated by the electronic control unit 21 using the access token AT under the offline condition. As illustrated in FIG. 5, steps S3 to S6 are performed in the state in which the working vehicle 1 and the service tool 100 are not connected to the key management server 50A via the communication link N2 (that is, the offline state). That is, steps S3 to S6 are performed under the offline condition.

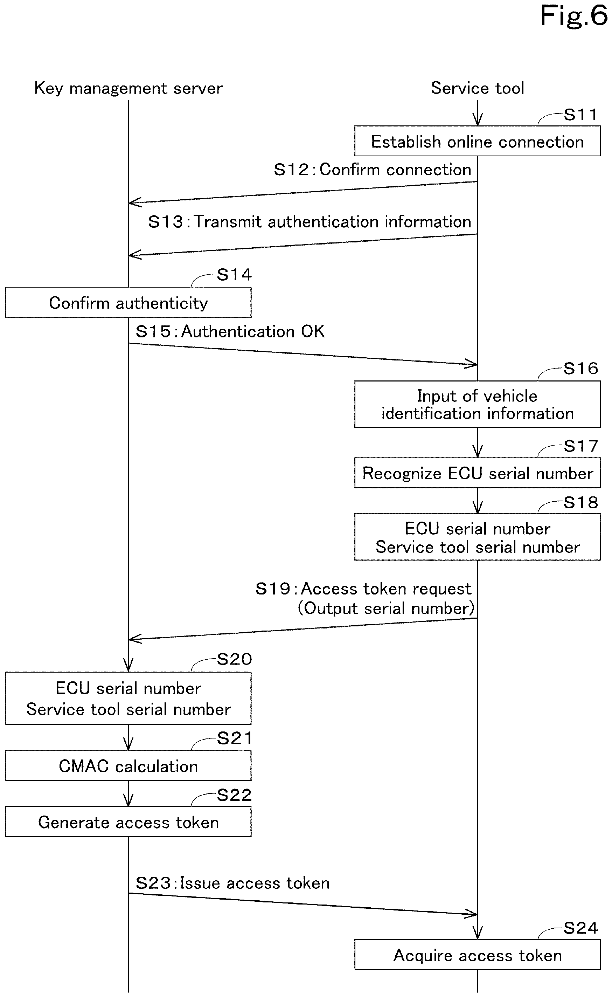

Steps S1 and S2 illustrated in FIGS. 3 and 4 will be described in detail with reference to FIG. 6. FIG. 6 is a flowchart presenting steps performed by the service tool 100 and the server 50 (the key management server 50A) under the online condition.

As presented in FIG. 6, the service tool 100 establishes an online connection with the key management server 50A via the communication link N2 such as the Internet based on an operation instruction from the client (S11), and outputs a connection signal to the key management server 50A (S12).

When the service tool 100 is connected online to the key management server 50A, the service tool 100 transmits authentication information (S13). As the authentication information, for example, a registered name (or a product number or the like) of the service tool 100 and a password are transmitted. The key management server 50A confirms the authenticity (S14). Specifically, the key management server 50A confirms whether the authentication information (the registered name and the password of the service tool 100) from the service tool 100 matches legitimate registered information (a legitimate registered name and a legitimate password) stored in the storing device 52 in advance, and determines that the authentication is OK in the case of matching (S15). In contrast, the key management server 50A determines that the authentication is not OK in the case of mismatching.

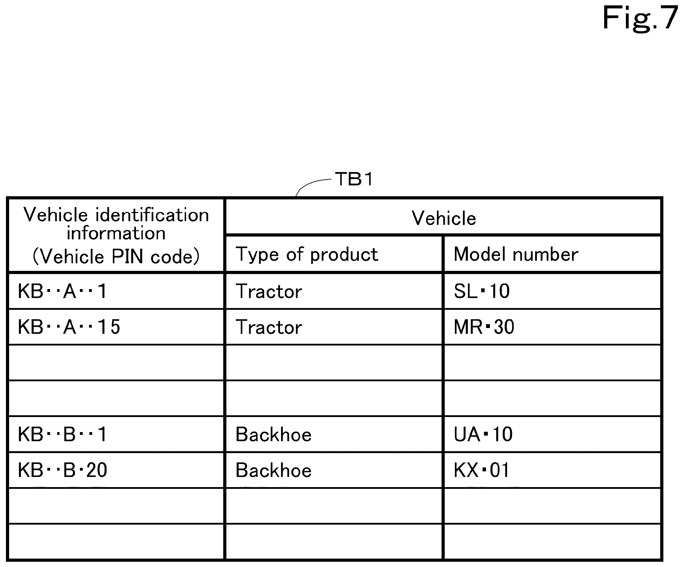

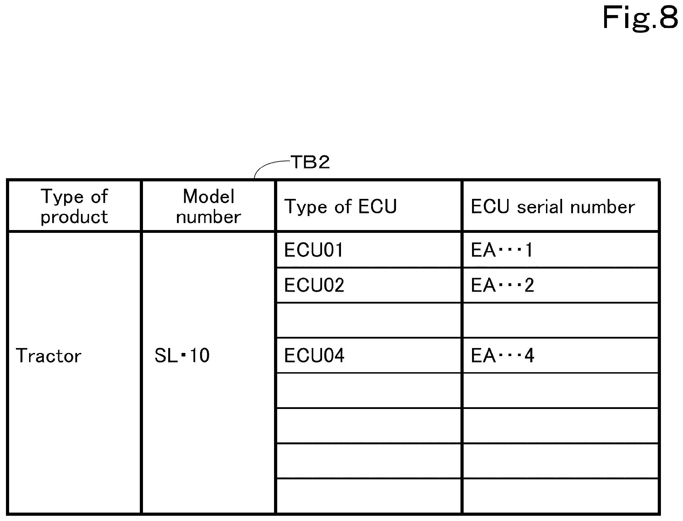

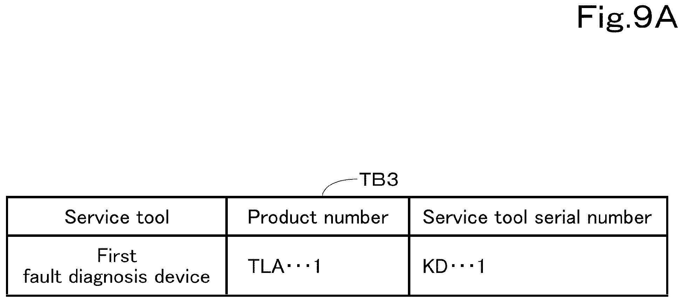

The storing device 102 of the service tool 100 stores a first table TB1 presented in FIG. 7, a second table TB2 presented in FIG. 8, and a third table TB3 presented in FIG. 9A in advance. FIG. 7 illustrates the first table TB1 indicating the correspondence relationship between vehicle identification information and the type and the model number of a product of a vehicle. FIG. 8 illustrates the second table TB2 presenting the correspondence relationship between the type and the model number of a product of a vehicle and the number and the serial number of an electronic control unit 21. FIG. 9A illustrates the third table TB3 presenting the correspondence relationship between the product number and the serial number of a service tool 100.

The first table TB1 presented in FIG. 7 stores the vehicle identification information (a vehicle personal identification number (PIN) code), and the type and the model number of the product of the vehicle in association with each other. For example, in the first table TB 1, "KB··A··1" which is vehicle identification information (a vehicle PIN code), and "tractor" which is the type and "SL·10" which is the model number of a product of a working vehicle 1 are stored in association with each other. Additionally, in the first table TB1, "KB··B··1" which is vehicle identification information (a vehicle PIN code), "and backhoe" which is the type and "UA·10" which is the model number of a product of a working vehicle 1 are stored in association with each other.

The second table TB2 presented in FIG. 8 stores the type and the model number of a product of a vehicle, the type and the ECU serial number of an ECU (an electronic control unit 21) in association with each other. For example, in the second table TB2, "tractor" which is the type and "SL·10" which is the model number of a product of a working vehicle 1, the types of ECUs (for example, "ECU01" to "ECU05"), and the ECU serial numbers (for example, "EA···1" to "EA···5") are stored in association with each other. That is, it is stored that the "tractor" whose model number is "SL·10" has the types of ECUs (for example, "ECU01" to "ECU05") and their serial numbers are "EA···1" to "EA···5". Note that "ECU01" to "ECU05" correspond to the ECU 20a for speed control, the ECU 20b for steering control, the ECU 20c for implement control, the ECU 20d for automatic operation control, and the ECU 20e for position estimation control illustrated in FIG. 1.

In the third table TB3 presented in FIG. 9A, the product number and the serial number of a service tool 100 are stored in association with each other. Here, it is assumed that the service tool 100 is a first fault diagnosis device. Thus, the service tool 100 (the first fault diagnosis device) stores "TLA···1" which is the product number of the first fault diagnosis device and "KD···1" which is the service tool serial number in association with each other. Note that, when the service tool 100 is a second fault diagnosis device, the second fault diagnosis device stores "TLA···2" which is the product number of the second fault diagnosis device and "KD···2" which is the service tool serial number in association with each other. When the service tool 100 is an n-th fault diagnosis device, the n-th fault diagnosis device stores "TLA···n" which is the product number of the n-th fault diagnosis device and "KD···n" which is the service tool serial number in association with each other. Note that the first fault diagnosis device and the second fault diagnosis device may be a first reprogramming device and a second reprogramming device (the same applies hereinafter).

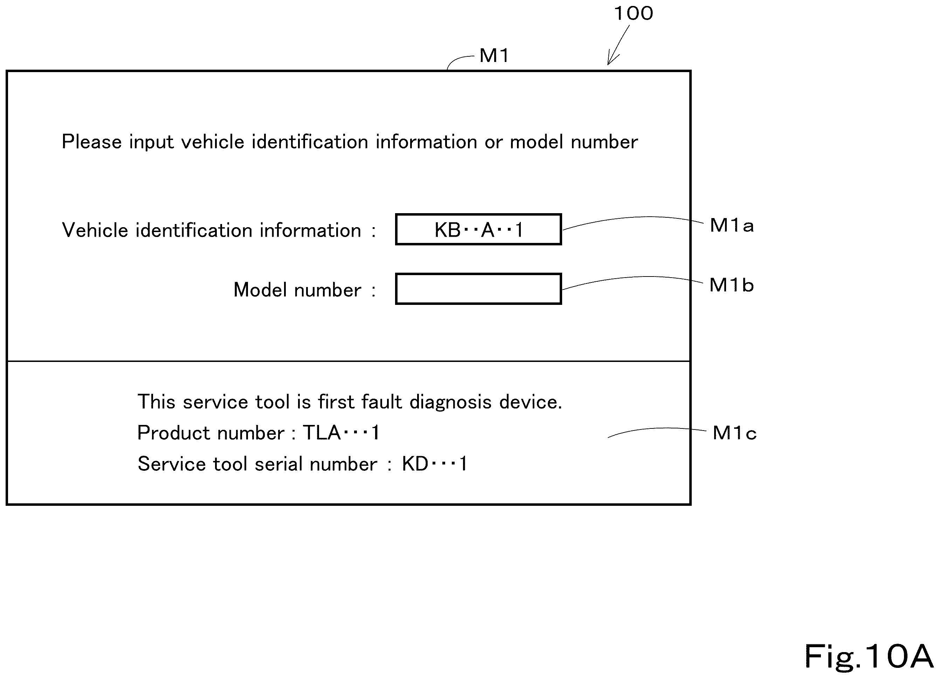

Referring back to FIG. 6, the display 105 of the service tool 100 displays a display screen M1 illustrated in FIG. 10A after step S15. FIG. 10A illustrates an example of the display screen M1 of the service tool 100. On the display screen M1 illustrated in FIG. 10A, a message "Please input vehicle identification information or model number", an input field M1a in which vehicle identification information is input by the client, and an input field M1b in which a model number is input by the client are displayed. Additionally, on the display screen M1 illustrated in FIG. 10A, a display field M1c for displaying information related to the service tool 100 is displayed. In the display field M1c, "This service tool 100 is first fault diagnosis device.", "Product number: TLA···1", and "Service tool serial number: KD···1" are displayed.

When the vehicle identification information is input to the input field M1a illustrated in FIG. 10A (S16), the service tool 100 recognizes the ECU serial number (S17). For example, it is assumed that "KB··A··1" is input as the vehicle identification information (the vehicle PIN code) in the input field M1a.

The service tool 100 recognizes information of the working vehicle 1 corresponding to "KB··A··1" which is the vehicle identification information (the vehicle PIN code) using the first table TB1 presented in FIG. 7. That is, the service tool 100 recognizes that the type of the product of the working vehicle 1 corresponding to "KB··A··1" which is the vehicle identification information (the vehicle PIN code) is "tractor" and the model number thereof is "SL·10".

Next, the service tool 100 recognizes the type and the ECU serial number of the ECU included in the in-vehicle controller 20 of the working vehicle 1 using the second table TB2 presented in FIG. 8. That is, the service tool 100 recognizes the types (for example, "ECU01" to "ECU05") and the ECU serial numbers (for example, "EA···1" to "EA···5") of the ECUs included in the in-vehicle controller 20 of the "tractor" whose model number is "SL·10".

Thus, the service tool 100 recognizes that the ECU 20a to the ECU 20e corresponding to "ECU01" to "ECU05" are included. That is, the service tool 100 recognizes that the ECU 20a for speed control, the ECU 20b for steering control, the ECU 20c for implement control, the ECU 20d for automatic operation control, and the ECU 20e for position estimation control illustrated in FIG. 1 are included.

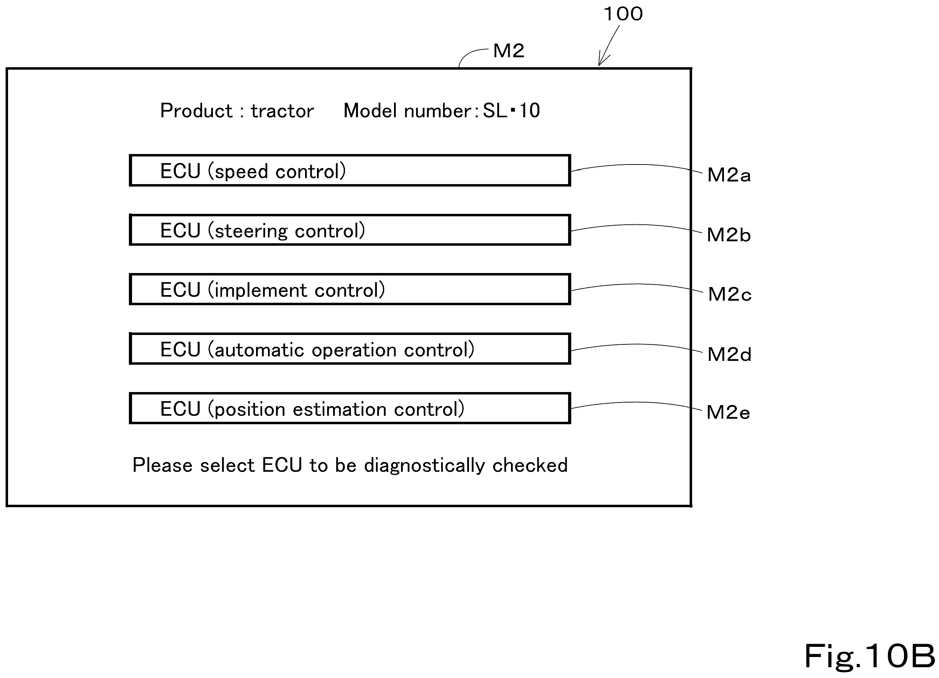

FIG. 10B illustrates an example of a display screen M2 of the service tool 100. The display 105 of the service tool 100 displays the display screen M2 illustrated in FIG. 10B. On the display screen M2, as illustrated in FIG. 10B, display fields M2a to M2e for respectively displaying the ECU 20a to the ECU 20e included in the in-vehicle controller 20, and a message "Please select ECU to be diagnostically checked" (or "Please select ECU to be reprogrammed") are displayed. For example, when the display field M2d indicating "ECU (automatic operation control)" on the display screen M2 is selected by the client, the service tool 100 receives the selection of the ECU 20d and recognizes that the ECU serial number of the ECU 20d is "EA···4" using the second table TB2 presented in FIG. 8 (S17).

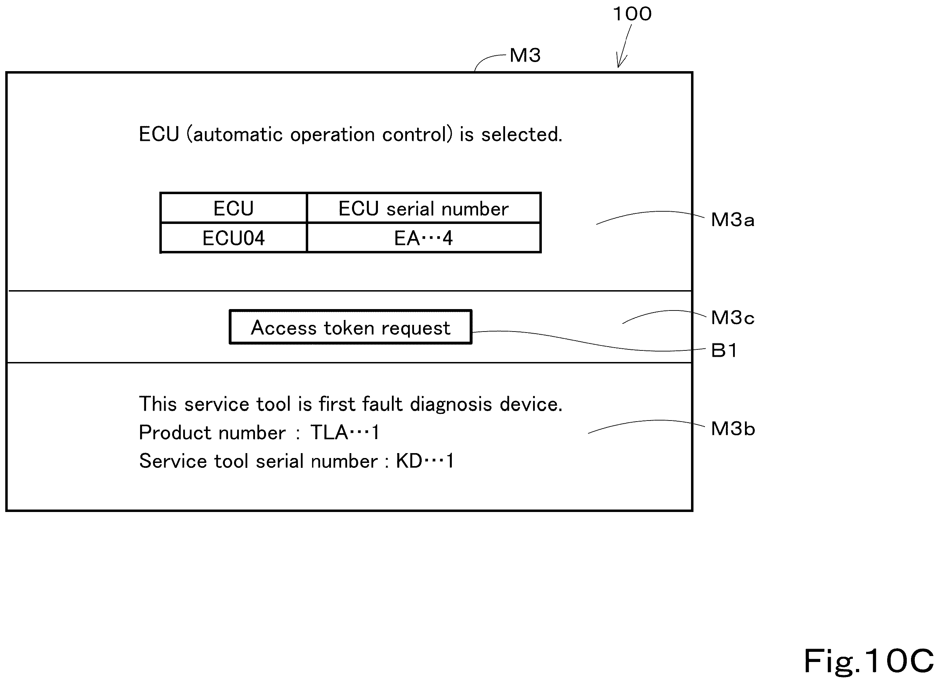

FIG. 10C illustrates an example of a display screen M3 of the service tool 100. The display 105 of the service tool 100 displays the display screen M3 illustrated in FIG. 10C. On the display screen M3, as illustrated in FIG. 10C, a display field M3a indicating the selected ECU, a display field M3b for displaying information related to the service tool 100, and a display field M3c for displaying a button image B1 for instructing an access token request are displayed.

In the display field M3a, a message "ECU (automatic operation control) is selected.", the information indicating that the type of the selected ECU is "ECU04", and the information indicating that the ECU serial number is "EA···4" are displayed.

In the display field M3b, information related to the service tool 100 is displayed. The service tool 100 recognizes that the service tool 100 is the first fault diagnosis device, recognizes "TLA···1" which is the product number of the first fault diagnosis device, and recognizes "KB···1" which is the service tool serial number, using the third table TB3 presented in FIG. 9A, and displays these in the display field M3b.

As presented in FIG. 6, the service tool 100 recognizes the ECU serial number ("EA···4") and the service tool serial number ("KB···1") (S18). When a touch operation (an instruction for an access token request) is made on the button image B1 illustrated in FIG. 10C, the service tool 100 transmits the access token request to the key management server 50A (S19). In so doing, the service tool 100 transmits the ECU serial number ("EA···4") and the service tool serial number ("KB···1") to the key management server 50A.

The key management server 50A acquires the ECU serial number ("EA···4") and the service tool serial number ("KB···1") from the service tool 100 (S20). Note that the key management server 50A acquires the ECU serial number and the service tool serial number from the service tool 100; however, this does not imply any limitation. For example, the key management server 50A may acquire the ECU serial number and the service tool serial number by identifying (determining) them.

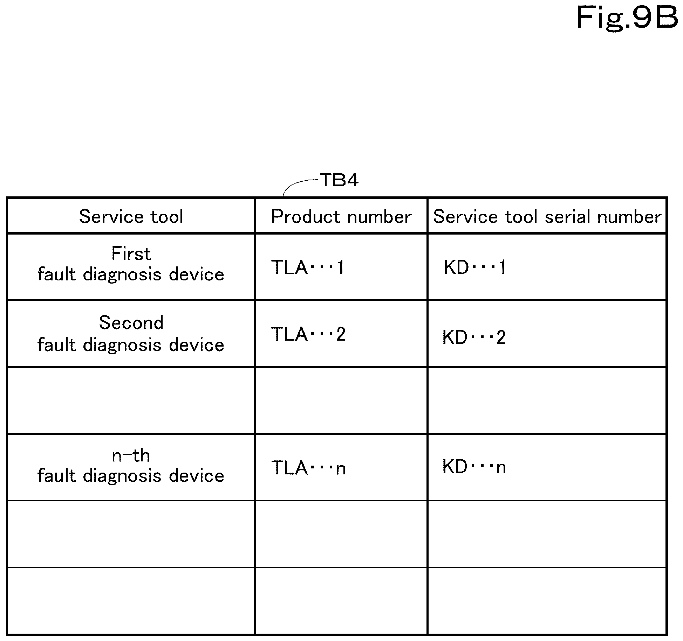

For example, the key management server 50A includes the first table TB1 presented in FIG. 7, the second table TB2 presented in FIG. 8, and a fourth table TB4 presented in FIG. 9B. FIG. 9B illustrates the fourth table TB4 presenting the correspondence relationship between the product number and the serial number of a service tool 100. The key management server 50A may recognize the ECU serial number ("EA···4") based on the information (for example, (i) the vehicle identification information or the model number and (ii) the information of the type of the ECU) related to the at least one to-be-serviced unit DT of the working vehicle 1 from the service tool 100, the first table TB1, and the second table TB2, acquire the product number (for example, "TLA···1") of the service tool 100 when in online connection with the service tool 100, recognize the identification information (the service tool serial number ("KB···1")) corresponding thereto using the fourth table TB4 (see FIG. 9B), and acquire the ECU serial number ("EA···4") and the service tool serial number ("KB···1").

The generator 54 of the key management server 50A performs encryption calculation (for example, CMAC calculation) based on the access token request (S21), and generates an access token AT (S22).

As illustrated in FIGS. 3 and 4, the generator 54 generates the access token AT through encryption calculation (for example, CMAC calculation) using the identification information (ECU serial number: "EA···4") of the at least one to-be-serviced unit DT, the identification information (for example, service tool serial number: "KB···1") of the service tool 100, the key KY1, a counter CT1, and a random number.

The counter CT1 increments the counter value for each to-be-serviced unit DT (increments the counter value by "+1") every time the access token AT is generated. The storing device 52 of the key management server 50A stores a counter value for each to-be-serviced unit DT. Since authentication from the ECU 20d is to be obtained here, the counter value associated with the serial number (the ECU serial number) of the ECU 20d is read from the storing device 52, incremented, and stored. For example, the counter CT1 increments the counter value to "2" when the counter value associated with the ECU 20d is "1". The counter CT1 achieves one-time authentication using one access token AT.

The random number is used to make it difficult to guess the value of the key KY1 for symmetric key cryptography. The access token AT includes a random number, a counter value C1, and a CMAC. The access token AT is used for the service tool 100 to obtain authentication from the at least one to-be-serviced unit DT (the selected electronic control unit 21 (that is, the ECU 20d)).

The key management server 50A issues the access token AT (S23). The key management server 50A transmits the generated access token AT to the service tool 100. The service tool 100 acquires the access token AT from the key management server 50A (S24). For example, the service tool 100 stores the acquired access token AT in the storing device 102 in association with the serial number (the ECU serial number) of the ECU 20d. The display 105 of the service tool 100 displays a display screen indicating that the access token AT has been acquired. Thus, the client can recognize that the service tool 100 has acquired the access token AT.

Step S1 under the online condition illustrated in FIGS. 3 and 4 includes steps S11 to S19 (at least steps S18 and S19) in FIG. 6. Step S2 under the online condition illustrated in FIGS. 3 and 4 includes steps S20 to S24 in FIG. 6.

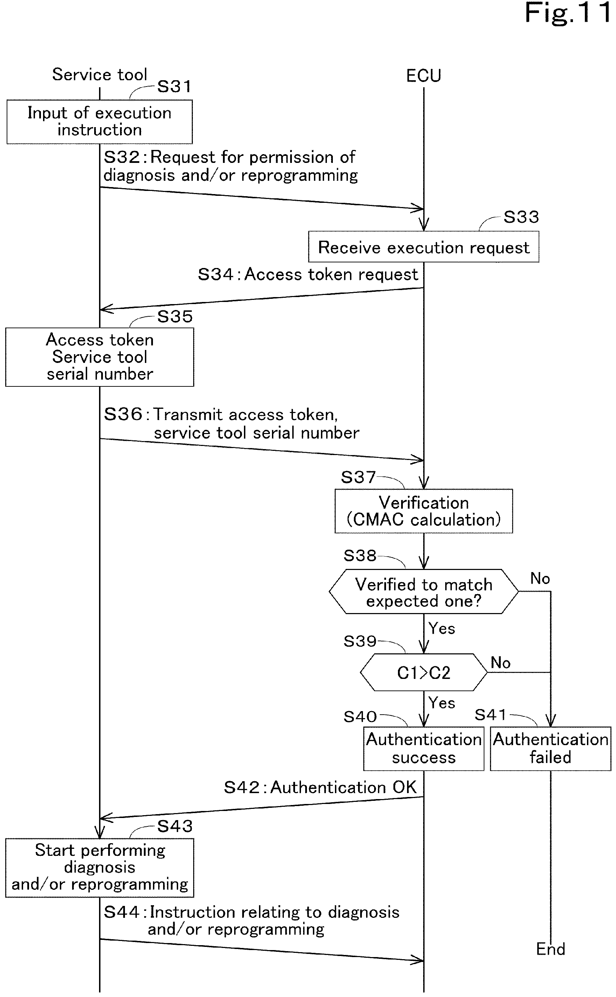

Next, steps S3 to S6 under the offline condition illustrated in FIGS. 3 and 5 will be described in detail with reference to FIG. 11. FIG. 11 is a flowchart presenting steps performed by the service tool 100 and the electronic control unit 21 under the offline condition.

The service tool 100 can obtain authentication from the at least one to-be-serviced unit DT under the offline condition. Here, a case where the service tool 100 diagnostically checks the at least one to-be-serviced unit DT (the selected ECU 20d) of the working vehicle 1 in an out-of-network area, or under a condition in which network communication is temporarily impossible in a coverage area, that is, under the offline condition will be described.

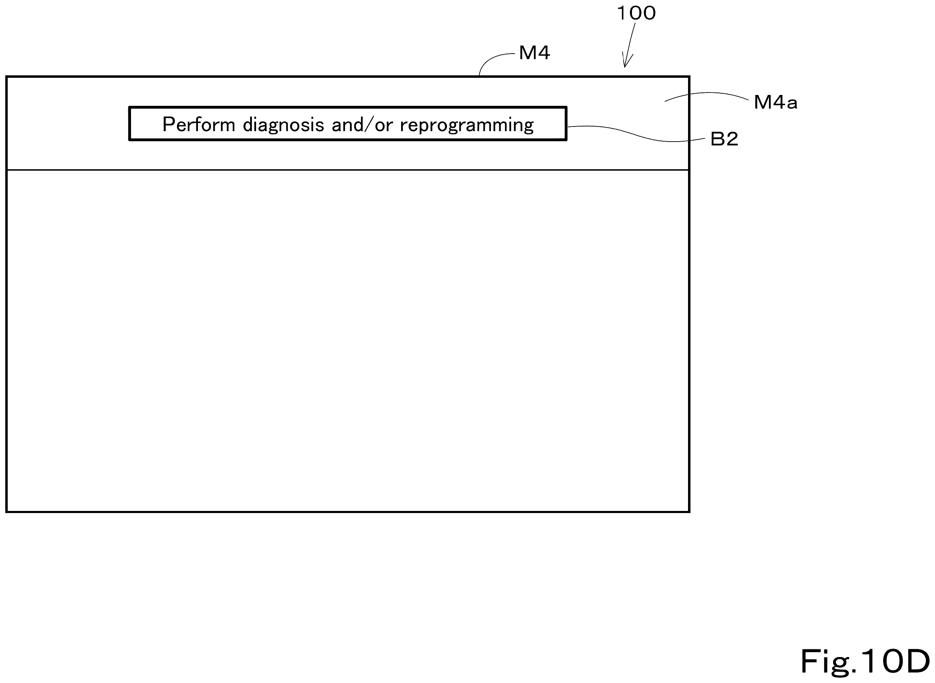

Assume here that the service tool 100 is connected to the in-vehicle controller 20 of the working vehicle 1 via the cable 106. Also assume that the display 105 of the service tool 100 displays a display screen M4 illustrated in FIG. 10D. FIG. 10D illustrates an example of the display screen M4 of the service tool 100. On the display screen M4 illustrated in FIG. 10D, a display field M4a for displaying a button image B2 for instructing "perform diagnosis and/or reprogramming" is displayed.

As illustrated in FIG. 11, when the service tool 100 receives an input of an execution instruction for diagnosis and/or reprogramming of the ECU 20d from the client (S31), that is, when a touch operation (the execution instruction for diagnosis and/or reprogramming) is made on the button image B2 illustrated in FIG. 10D, the service tool 100 transmits a request for permission of diagnosis and/or reprogramming to the ECU 20d of the in-vehicle controller 20 of the working vehicle 1 (S32).

The ECU 20d receives the request (S33), and sends a request for the access token AT to the service tool 100 (S34). When the service tool 100 receives the request for the access token AT, the service tool 100 reads the access token AT (the access token AT for diagnosis and/or reprogramming of the ECU 20d) acquired in step S24 of FIG. 6 and the service tool serial number ("KB···1") thereof from the storing device 102 (S35), and transmits the access token AT and the service tool serial number thereof to the ECU 20d via the cable 106 (S36).

For example, since the service tool 100 has received the input of the execution instruction for diagnosis and/or reprogramming of the ECU 20d (that is, the selection instruction of the ECU 20d) from the client in step S31, the service tool 100 reads the acquired access token AT corresponding to the ECU 20d from the storing device 102 and transmits the access token AT to the ECU 20d together with the service tool serial number thereof.

The ECU 20d verifies the access token AT through encryption calculation (for example, CMAC calculation) using the information (the access token AT and the service tool serial number ("KB···1")) from the service tool 100, the ECU serial number ("EA···4") stored in the ECU 20d, and the key KY1 (S37).

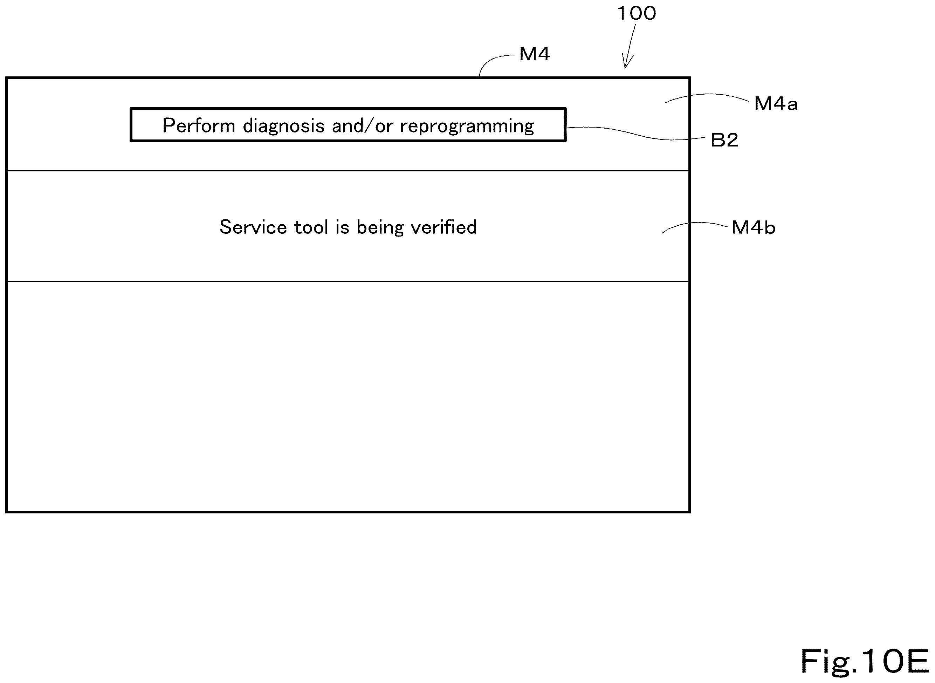

FIG. 10E illustrates an example of the display screen M4 of the service tool 100. The display 105 of the service tool 100 displays a display field M4b indicating "Service tool is being verified" on the display screen M4 illustrated in FIG. 10E. The display field M4b indicates that the service tool 100 is being verified by the ECU 20d.

The ECU 20d determines whether the access token AT is verified to match the expected one (S38). When it is confirmed that the access token AT does not match the expected one (No in S38), the ECU 20d determines that the authentication of the service tool 100 fails (S41), and the process ends. That is, since the service tool 100 is not authenticated by the ECU 20d, the service tool 100 cannot acquire information from the ECU 20d and cannot diagnostically check and/or reprogram the ECU 20d. Thus, it is possible to prevent or reduce an illegitimate attack performed by the service tool 100.

In contrast, when it is confirmed that the access token AT matches the expected one (Yes in S38), the ECU 20d determines whether the counter value C1 included in the access token AT is larger than the counter value C2 thereof (S39).

As illustrated in FIGS. 3 and 5, the ECU 20d includes a counter CT2. The counter CT2 increments the counter value (increments the counter value by "+1") every time it is determined that the authentication succeeds (S40), which will be described later. Here, it is assumed that the counter value is "1" because the ECU 20d determines that the authentication has succeeded once in the past. Note that, in the ECU 20d, the counter value is "0" when the authentication has never succeeded in the past.

When the counter value C1 included in the access token AT is larger than the counter value C2 thereof (Yes in S39), the ECU 20d determines that the authentication succeeds (S40). That is, it is possible to prevent or reduce the reuse of an access token AT in the past. Here, since the counter value C1 (for example, "2") included in the access token AT is larger than the counter value C2 (for example, "1") thereof, it is determined that the authentication succeeds. Note that, after it is determined that the authentication succeeds (S40), the counter CT2 increments the counter value C2 thereof (for example, to "2"). Accordingly, it is possible to prevent or reduce the reuse of an access token AT that has been used once. Additionally or alternatively, the counter CT2 may, after it is determined that the authentication succeeds (S40), cause the counter value C2 thereof to be equal to the counter value C1 included in the verified access token AT (or the counter value C1 transmitted from the service tool 100 to the at least one to-be-serviced unit DT independently of the access token AT). Accordingly, it is possible to prevent or reduce the use (misuse) of an unused old access token AT that has been issued before the verified access token AT.

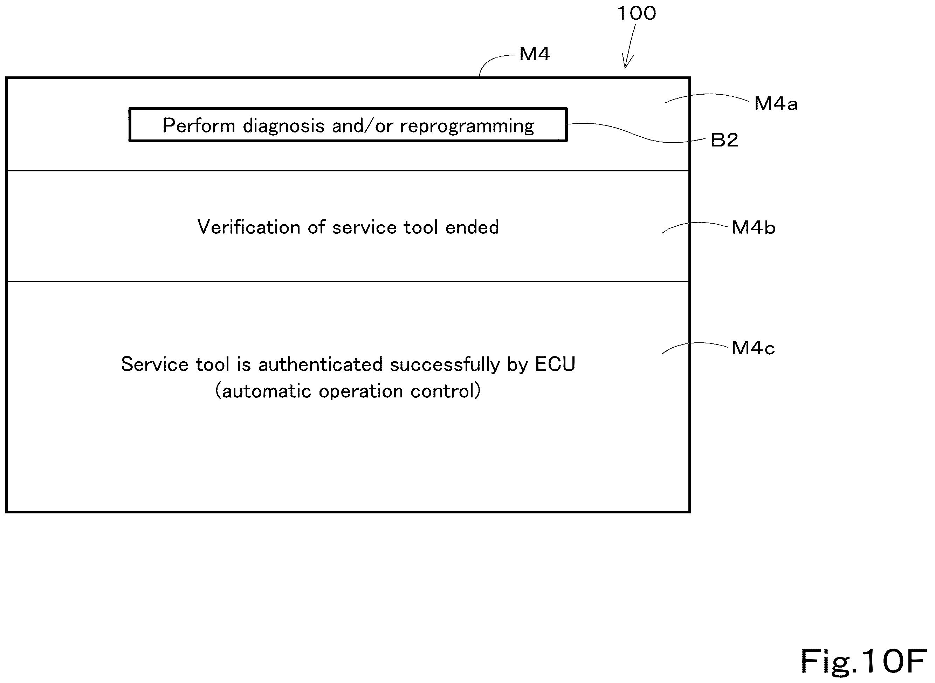

FIG. 10F illustrates an example of the display screen M4 of the service tool 100. The display 105 of the service tool 100 displays a display field M4c indicating "Service tool is authenticated successfully by ECU (automatic operation control)" on the display screen M4 illustrated in FIG. 10F. The display field M4c indicates that the service tool 100 is authenticated by the ECU 20d. In a display field M4b, the indication "Service tool is being verified" has been changed to the indication "Verification of service tool ends".

In contrast, when the counter value C1 included in the access token AT is not larger than the counter value C2 thereof (No in S39), the ECU 20d determines that authentication of the service tool 100 fails (S41). In this case, the display 105 of the service tool 100 displays the display field M4c indicating "Authentication of service tool fails by ECU (automatic operation control) failed" on the display screen M4 illustrated in FIG. 10F. Note that the counter CT2 does not increment the counter value in the case where the authentication fails (S41). This is to eliminate or reduce the likelihood that the counter value of the counter CT2 will be incremented when the authentication by the ECU 20d is fraudulently attempted and the authentication fails (S40).

After S40, the ECU 20d transmits, to the service tool 100, information indicating that the authentication is OK (S42). When the authentication by the ECU 20d is OK, the service tool 100 starts performing diagnosis and/or reprogramming (S43) and transmits an instruction relating to diagnosis and/or reprogramming to the ECU 20d (S44). The service tool 100 can then diagnostically check and/or reprogram the ECU 20d under the offline condition.

Step S3 under the offline condition illustrated in FIGS. 3 and 5 includes steps S31 and S32 in FIG. 11. Step S4 under the offline condition illustrated in FIGS. 3 and 5 includes step S34 in FIG. 11. Step S5 under the offline condition illustrated in FIGS. 3 and 5 includes step S36 in FIG. 11. Step S6 under the offline condition illustrated in FIGS. 3 and 5 includes steps S37 to S41 in FIG. 11.

With the configuration of the above-described example embodiment, the generator 54 generates the access token AT through encryption calculation using the identification information of the at least one to-be-serviced unit DT and the identification information of the service tool 100. Since the service tool 100 acquires the access token AT and outputs the acquired access token AT to the at least one to-be-serviced unit DT (that is, the selected electronic control unit 21) to obtain authentication, the reliability of the service tool 100 can be improved. Thus, when the service tool 100 is authenticated using the access token AT, the service tool 100 can diagnostically check the at least one to-be-serviced unit DT and/or update (reprogram) the software. Accordingly, it is possible to provide a secure service tool 100 of the vehicle (the working vehicle 1).

For example, even when an unauthorized person tries to obtain authentication from the at least one to-be-serviced unit DT using the service tool 100 that has not acquired the access token AT, the authentication fails because of the absence of the access token AT. Also, the unauthorized person cannot know that the authentication fails because of the absence of the access token AT. Thus, it is possible to prevent or reduce the unauthorized use of the service tool 100.

Note that, when the ECU 20d determines that authentication of the service tool 100 fails (S41), the ECU 20d may store management information in which the identification information (the service tool serial number) of the service tool 100 is associated with authentication failure information including at least one of the result of failure in authentication, the reason thereof (the reason due to mismatching of the access token AT, or the reason due to the fact that the counter value C1 is not larger than the counter value C2 thereof), and the number of failures in authentication. Then, when the ECU 20d is in a state of being able to communicate with the key management server 50A, the ECU 20d may transmit the management information to the key management server 50A via the first communicator 29. The key management server 50A may monitor the authentication status of the plurality of service tools 100 based on the management information. Additionally or alternatively, when a service tool 100 matching the identification information (for example, the service tool serial number) of the service tool 100 included in the management information is connected online, the key management server 50A may issue a warning to the service tool 100 or prohibit the issuance of the access token AT.

### First Variation

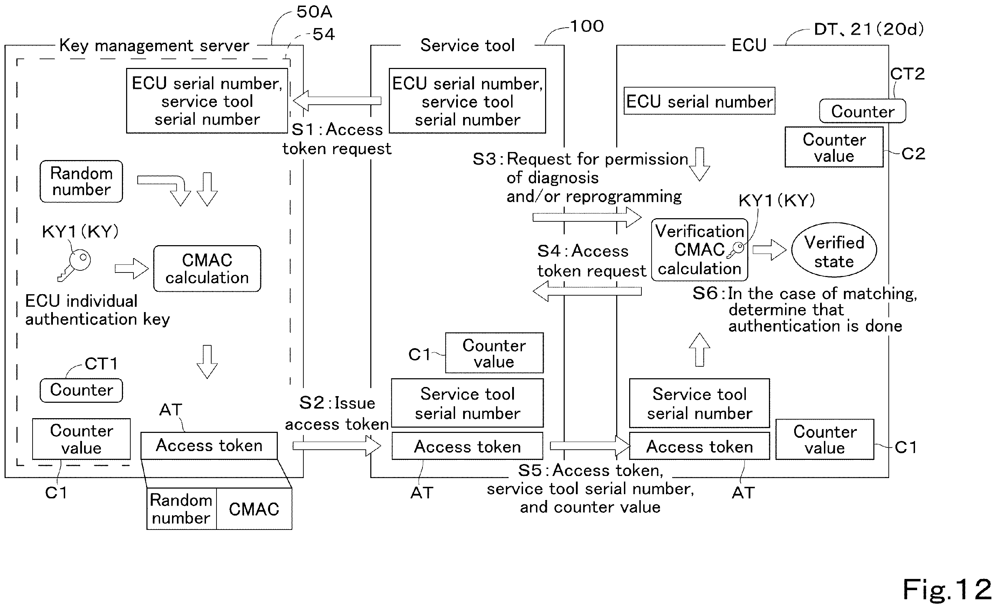

FIG. 12 illustrates a flow of a process to authenticate a service tool 100 performed by a service system S of a first variation of example embodiments of the present invention. In the service system S of the first variation, the service tool 100 acquires an access token AT and a counter value C1 independently of the access token AT from the server 50 (the key management server 50A) in advance under the online condition. That is, the access token AT does not include the counter value C1, and the access token AT and the counter value C1 are independent of each other.

The service tool 100 is connected to the in-vehicle controller 20 of the working vehicle 1 via the cable 106 in order to obtain authentication from the at least one to-be-serviced unit DT (for example, the ECU 20d). Under the offline condition, in the case where the access token AT is verified to match the expected one, the at least one to-be-serviced unit DT (for example, the ECU 20d) determines that the service tool 100 is authenticated successfully when the counter value C1 is larger than the counter value C2 thereof, and determines that authentication of the service tool 100 fails when the counter value C1 is not larger than the counter value C2. Note that either the verification or the comparison of the counter values may be performed first. Additionally or alternatively, in a case where the counter value C1 independent of the access token AT is decremented from a predetermined number every time the access token AT is issued and the counter value of the at least one to-be-serviced unit DT is decremented from a predetermined number every time the access token AT is verified, it may be determined that the authentication succeeds when the counter value C1 independent of the access token AT is smaller than the counter value C2 of the at least one to-be-serviced unit DT, and it may be determined that the authentication fails when the counter value C1 is not smaller than the counter value C2. Additionally or alternatively, it may be determined that the authentication succeeds when the counter value C1 independent of the access token AT is equal to the counter value C2 of the at least one to-be-serviced unit DT, and it may be determined that the authentication fails when the counter value C1 is not equal to the counter value C2.

In the first variation, the at least one to-be-serviced unit DT (for example, the ECU 20d) not only determines that authentication of the service tool 100 fails when the access token AT is verified to not match the expected one, but also determines that the authentication of the service tool 100 fails when it is determined that the counter value C1 independent of the access token AT is not larger than the counter value C2 thereof even though the access token AT is verified to match the expected one, and thus, the at least one to-be-serviced unit DT can perform authentication using the access token AT and authentication using the counter value C1 independent of the access token AT.

With the first variation, even when the access token AT is verified to match the expected one, the selected electronic control unit 21 determines that the authentication fails unless the counter value C1 independent of the access token AT is larger than the counter value C2 thereof. Thus, it is possible to prevent or reduce the reuse of an access token AT, and to eliminate or reduce the likelihood that the security level will lower when an access token AT is leaked. That is, it is possible to prevent or reduce the reuse of an access token AT in the past, and to improve security.

In the above-described example embodiments and first variation, the counter CT1 is used. However, a one-time password valid only for a period of time may be used. For example, the one-time password is transmitted from the key management server 50A to the service tool 100 under the online condition, and is transmitted from the service tool 100 to the at least one to-be-serviced unit DT (the selected ECU 20d) under the offline condition. In the case where the access token AT is verified to match the expected one, the at least one to-be-serviced unit DT determines that the authentication succeeds when the one-time password transmitted from the service tool 100 is correct and the period of the one-time password has not expired. Furthermore, although the counter CT1 is used in the above-described example embodiments and first variation, a value based on a time such as a time stamp may be used. For example, a value based on a time such as a time stamp is transmitted from the key management server 50A to the service tool 100 under the online condition, and is transmitted from the service tool 100 to the at least one to-be-serviced unit DT (the selected ECU 20d) under the offline condition. In the case where the access token AT is verified to match the expected one, the at least one to-be-serviced unit DT determines that the authentication succeeds when there is a value based on a time such as a time stamp transmitted from the service tool 100. Note that either the verification of the access token AT or the confirmation of the counter value (the one-time password or the value based on a time such as the time stamp) performed by the at least one to-be-serviced unit DT may be performed first.

### Second Variation

The identification information of the at least one to-be-serviced unit DT and the identification information of the service tool 100 may be each determined using a random number. That is, the identification information (the ECU serial number) of the at least one to-be-serviced unit DT and the identification information (the service tool serial number) of the service tool 100 may be modified using a random number, instead of being used as they are.

With the second variation, the identification information of the selected electronic control unit 21 and the identification information of the service tool 100 are not fixed information (for example, serial numbers), but can be information that change modified using a random number. Thus, security can be improved.

The main characteristic items of and advantageous effects achieved by service systems S, servers 50, and service tools 100 in the above-described example embodiments and the like are as follows.

(Item A1) A service system S including a generator 54 configured or programmed to generate an access token AT through encryption calculation using identification information of at least one to-be-serviced unit DT and identification information of a service tool 100, the at least one to-be-serviced unit DT being a selected at least one of a plurality of electronic control units 21 provided in or on a vehicle (working vehicle 1), the service tool 100 being configured or programmed to diagnostically check and/or reprogram the at least one to-be-serviced unit DT, wherein the service tool 100 is configured or programmed to acquire the access token AT and output the acquired access token AT to the at least one to-be-serviced unit DT to obtain authentication.

With the configuration, the generator 54 generates the access token AT through encryption calculation using the identification information of the at least one to-be-serviced unit DT and the identification information of the service tool 100. Since the service tool 100 acquires the access token AT and outputs the acquired access token AT to the at least one to-be-serviced unit DT (that is, the selected electronic control unit 21) to obtain authentication, the reliability of the service tool 100 can be improved. Thus, when the service tool 100 is authenticated using the access token AT, the service tool 100 can diagnostically check the at least one to-be-serviced unit DT and/or update (reprogram) software. With this, it is possible to provide a secure service tool 100 for a vehicle (working vehicle 1). That is, it is possible to provide a system which allows an operator, who is permitted to make access, to provide a service to the offline working vehicle 1.

(Item A2) The service system S according to item A1, further including a server 50 including the generator 54, wherein the service tool 100 is configured or programmed to acquire the access token AT from the server 50 and output the acquired access token AT to the at least one to-be-serviced unit DT to obtain authentication.

With this configuration, the server 50 generates the access token AT, and the service tool 100 acquires the access token AT from the server 50. That is, since the service tool 100 does not have the function of generating the access token AT, the access token AT cannot be generated in an unauthorized manner even when the service tool 100 is operated in an unauthorized manner. Thus, it is possible to provide a secure service tool 100 for a vehicle (working vehicle 1).

(Item A3) The service system S according to item A2, wherein the service tool 100 is configured or programmed to, under a condition in which the vehicle (working vehicle 1) and the server 50 are not connected to each other via a communication link N2, transmit the access token AT to the at least one to-be-serviced unit DT and obtain authentication from the at least one to-be-serviced unit DT based on the access token AT.

With this configuration, the at least one to-be-serviced unit DT (that is, the selected electronic control unit 21) can authenticate the service tool 100 under the condition in which the vehicle (working vehicle 1) and the server 50 are not connected to each other via the communication link N2. That is, the at least one to-be-serviced unit DT can authenticate the service tool 100 offline.

(Item A4) The service system S according to item A2 or A3, wherein the service tool 100 is configured or programmed to acquire the access token AT from the server 50 via the communication link N2 in advance before being authenticated by the at least one to-be-serviced unit DT.

With this configuration, the service tool 100 acquires the access token AT from the server 50 via the communication link N2 (that is, online) in advance, and is authenticated by the at least one to-be-serviced unit DT. Thus, only the service tool 100 of a legitimate user can acquire the access token AT, improving the reliability of the service tool 100. With this, only the service tool 100 of the legitimate user can obtain authentication from the selected electronic control unit 21 and can diagnostically check the selected electronic control unit 21 and/or update (reprogram) software.

(Item A5) The service system S according to any one of items A2 to A4, wherein the server 50 or the service tool 100 is configured or programmed to identify the vehicle (working vehicle 1) based on vehicle identification information, and recognize the identification information of the at least one to-be-serviced unit DT in or on the vehicle (working vehicle 1).

With this configuration, the vehicle (working vehicle 1) to be serviced can be identified based on the vehicle identification information (for example, vehicle PIN code), and the identification information of one or more of the plurality of electronic control units 21 provided in or on the vehicle (working vehicle 1) that are selected as to-be-serviced electronic control unit(s) can be properly recognized.

(Item A6) The service system S according to any one of items A2 to A4, wherein the access token AT differs from one of the plurality of electronic control units 21 to another.

With this configuration, since the access token AT differs from one of the plurality of electronic control units 21 to another, it is possible to ensure the safety of diagnosis and/or reprogramming for the plurality of electronic control units 21.

(Item A7) The service system S according to any one of items A2 to A4, wherein the server 50 includes a key KY for key cryptography, and the generator 54 is configured or programmed to generate the access token AT through encryption calculation using the identification information of the at least one to-be-serviced unit DT, the identification information of the service tool 100, and the key KY.

With this configuration, since the server 50 includes the key KY for key cryptography, the service tool 100 can be configured or programmed not to include the key KY for key cryptography. Thus, it is possible to eliminate or reduce the likelihood that the key KY will be leaked from the service tool 100. With this, it is possible to provide a more secure service tool 100.

(Item A8) The service system S according to item A7, wherein the server 50 and the plurality of electronic control units 21 share a key KY1 for symmetric key cryptography.

With this configuration, the amount of calculation in authentication and the amount of data used for the authentication can be reduced as compared to the case of a key for public key cryptography, and even when the calculation performance of the electronic control units 21 of the vehicle (the working vehicle 1) is low, symmetric key cryptography can be used.

(Item A9) The service system S according to any one of items A2 to A8, wherein the generator 54 is configured or programmed to generate the access token AT using a counter value C1, the service tool 100 is configured or programmed to transmit the access token AT including the counter value C1 to the at least one to-be-serviced unit DT, and the at least one to-be-serviced unit DT is configured or programmed to verify the access token AT and compare the counter value C1 with a counter value C2 thereof to authenticate the service tool 100.

With this configuration, even when the access token AT is verified to match the expected one, the selected electronic control unit 21 determines that the authentication fails unless the counter value C1 included in the access token AT is larger than the counter value C2 thereof. Thus, it is possible to prevent or reduce the reuse of an access token AT, and to eliminate or reduce the likelihood that the security level will lower when an access token AT is leaked. That is, it is possible to prevent or reduce the reuse of previous access tokens AT, and to improve security.

(Item A10) The service system S according to item A9, wherein the at least one to-be-serviced unit DT includes a counter CT2, and is configured or programmed to, after determining that the service tool 100 is authenticated successfully, increment the counter value C2 thereof counted by the counter CT2.

With this configuration, it is possible to prevent or reduce the reuse of an access token AT that has been used once.

(Item A11) The service system S according to item A9, wherein the at least one to-be-serviced unit DT is configured or programmed to, after determining that the service tool 100 is authenticated successfully, cause the counter value C2 thereof to be equal to the counter value C1 included in the verified access token AT.

With this configuration, it is possible to prevent or reduce the use (misuse) of an old unused access token AT issued before the verified access token AT.

(Item A12) The service system S according to any one of items A2 to A8, wherein the service tool 100 is configured or programmed to acquire a counter value C1 from the server 50 independently of the access token AT, the service tool 100 is configured or programmed to transmit the counter value C1 and the access token AT to the at least one to-be-serviced unit DT, and the at least one to-be-serviced unit DT is configured or programmed to verify the access token AT and compare the counter value C1 with a counter value C2 thereof to authenticate the service tool 100.

With this configuration, even when the access token AT is verified to match the expected one, the selected electronic control unit 21 determines that the authentication fails unless the counter value C1 independent of the access token AT is larger than the counter value C2 thereof. Thus, it is possible to prevent or reduce the reuse of an access token AT, and to eliminate or reduce the likelihood that the security level will lower when an access token AT is leaked. That is, it is possible to prevent or reduce the reuse of previous access tokens AT, and to improve security.

(Item A13) The service system S according to item A12, wherein the at least one to-be-serviced unit DT includes a counter CT2, and is configured or programmed to, after determining that the service tool 100 is authenticated successfully, increment the counter value C2 thereof counted by the counter CT2.

With this configuration, it is possible to prevent or reduce the reuse of an access token AT that has been used once.

(Item A14) The service system S according to item A12, wherein the at least one to-be-serviced unit DT is configured or programmed to, after determining that the service tool 100 is authenticated successfully, cause the counter value thereof to be equal to the counter value C1 transmitted from the service tool 100 to the at least one to-be-serviced unit DT independently of the access token AT.

With this configuration, it is possible to prevent or reduce the use (misuse) of an old unused access token AT issued before the verified access token AT.

(Item A15) The service system S according to any one of items A2 to A14, wherein the identification information of the at least one to-be-serviced unit DT and the identification information of the service tool 100 are each determined using a random number.

With this configuration, the identification information of the selected electronic control unit 21 and the identification information of the service tool 100 are not fixed information, but can be information that can be modified using a random number. Thus, security can be improved.

(Item A16) A server 50 including a generator 54 configured or programmed to generate an access token AT through encryption calculation using identification information of at least one to-be-serviced unit DT and identification information of a service tool 100, the at least one to-be-serviced unit being a selected at least one of a plurality of electronic control units 21 provided in or on a vehicle (working vehicle 1), the service tool 100 being configured or programmed to diagnostically check and/or reprogram the at least one to-be-serviced unit DT, the access token AT being an access token that the service tool 100 outputs to the at least one to-be-serviced unit DT to obtain authentication.

With this configuration, since the service tool 100 is authenticated using the access token AT before the selected electronic control unit 21 is diagnostically checked and/or software is updated (reprogrammed) by the service tool 100, it is possible to provide a secure service tool 100 for a vehicle (working vehicle 1).

(Item A17) A service tool 100 to diagnostically check and/or reprogram at least one to-be-serviced unit DT which is a selected at least one of a plurality of electronic control units 21 provided in or on a vehicle (working vehicle 1), wherein the service tool 100 is configured or programmed to acquire an access token AT from a generator 45 configured or programmed to generate the access token AT through encryption calculation using identification information of the at least one to-be-serviced unit DT and identification information of the service tool 100, and output the acquired access token AT to the at least one to-be-serviced unit DT to obtain authentication.

With this configuration, since the service tool 100 is authenticated using the access token AT before the selected electronic control unit 21 is diagnostically checked and/or software is updated (reprogrammed) by the service tool 100, it is possible to provide a secure service tool 100 for a vehicle (working vehicle 1).

While example embodiments of the present invention have been described above, it is to be understood that variations and modifications will be apparent to those skilled in the art without departing from the scope and spirit of the present invention. The scope of the present invention, therefore, is to be determined solely by the following claims.

## Claims

1. A service system (S) comprising:
a generator (54) configured or programmed to generate an access token (AT) through encryption calculation using identification information of at least one to-be-serviced unit (DT) and identification information of a service tool (100), the at least one to-be-serviced unit (DT) being a selected at least one of a plurality of electronic control units (21) provided in or on a vehicle (1), the service tool (100) being configured or programmed to diagnostically check and/or reprogram the at least one to-be-serviced unit (DT); wherein
the service tool (100) is configured or programmed to acquire the access token (AT) and output the acquired access token (AT) to the at least one to-be-serviced unit (DT) to obtain authentication.

2. The service system (S) according to claim 1, further comprising a server (50) including the generator (54); wherein
the service tool (100) is configured or programmed to acquire the access token (AT) from the server (50) and output the acquired access token (AT) to the at least one to-be-serviced unit (DT) to obtain authentication.

3. The service system (S) according to claim 2, wherein the service tool (100) is configured or programmed to, under a condition in which the vehicle (1) and the server (50) are not connected to each other via a communication link (N2), transmit the access token (AT) to the at least one to-be-serviced unit (DT) and obtain authentication from the at least one to-be-serviced unit (DT) based on the access token (AT).

4. The service system (S) according to claim 2 or 3, wherein the service tool (100) is configured or programmed to acquire the access token (AT) from the server (50) via the communication link (N2) in advance before being authenticated by the at least one to-be-serviced unit (DT).

5. The service system (S) according to any of claims 2 to 4, wherein the server (50) or the service tool (100) is configured or programmed to identify the vehicle (1) based on vehicle identification information, and recognize the identification information of the at least one to-be-serviced unit (DT) in or on the vehicle (1).

6. The service system (S) according to any of claims 2 to 4, wherein the access token (AT) differs from one of the plurality of electronic control units (21) to another.

7. The service system (S) according to any of claims 2 to 4, wherein
the server (50) includes a key (KY) for key cryptography; and
the generator (54) is configured or programmed to generate the access token (AT) through encryption calculation using the identification information of the at least one to-be-serviced unit (DT), the identification information of the service tool (100), and the key (KY).

8. The service system (S) according to claim 7, wherein the server (50) and the plurality of electronic control units (21) share a key (KY1) for symmetric key cryptography.

9. The service system (S) according to any of claims 2 to 8, wherein
the generator (54) is configured or programmed to generate the access token (AT) using a counter value (C1);
the service tool (100) is configured or programmed to transmit the access token (AT) including the counter value (C1) to the at least one to-be-serviced unit (DT); and
the at least one to-be-serviced unit (DT) is configured or programmed to verify the access token (AT) and compare the counter value (C1) with a counter value (C2) thereof to authenticate the service tool (100).

10. The service system (S) according to claim 9, wherein the at least one to-be-serviced unit (DT) includes a counter (CT2), and is configured or programmed to, after determining that the service tool (100) is authenticated successfully, increment the counter value (C2) thereof counted by the counter (CT2).

11. The service system (S) according to claim 9, wherein the at least one to-be-serviced unit (DT) is configured or programmed to, after determining that the service tool (100) is authenticated successfully, cause the counter value (C2) thereof to be equal to the counter value (C1) included in the verified access token (AT).

12. The service system (S) according to any of claims 2 to 8, wherein
the service tool (100) is configured or programmed to acquire a counter value (C1) from the server (50) independently of the access token (AT);
the service tool (100) is configured or programmed to transmit the counter value (C1) and the access token (AT) to the at least one to-be-serviced unit (DT); and
the at least one to-be-serviced unit (DT) is configured or programmed to verify the access token (AT) and compare the counter value (C1) with a counter value (C2) thereof to authenticate the service tool (100).

13. The service system (S) according to claim 12, wherein the at least one to-be-serviced unit (DT) includes a counter (CT2), and is configured or programmed to, after determining that the service tool (100) is authenticated successfully, increment the counter value (C2) thereof counted by the counter (CT2).

14. A server (50) comprising:
a generator (54) configured or programmed to generate an access token (AT) through encryption calculation using identification information of at least one to-be-serviced unit (DT) and identification information of a service tool (100), the at least one to-be-serviced unit (DT) being a selected at least one of a plurality of electronic control units (21) provided in or on a vehicle (1), the service tool (100) being configured or programmed to diagnostically check and/or reprogram the at least one to-be-serviced unit (DT), the access token (AT) being an access token that the service tool (100) outputs to the at least one to-be-serviced unit (DT) to obtain authentication.

15. A service tool (100) to diagnostically check and/or reprogram at least one to-be-serviced unit (DT) which is a selected at least one of a plurality of electronic control units (21) provided in or on a vehicle (1), wherein the service tool (100) is configured or programmed to:
acquire an access token (AT) from a generator (54) configured or programmed to generate the access token (AT) through encryption calculation using identification information of the at least one to-be-serviced unit (DT) and identification information of the service tool (100); and
output the acquired access token (AT) to the at least one to-be-serviced unit (DT) to obtain authentication.
